# EUROPEAN PATENT APPLICATION

(11) **EP 4 790 574 A1**
(43) Date of publication of application: **12.08.2026**
(21) Application number: 26178546.3
(22) Date of filing: 13.05.2026
(51) Int. Cl.: G06F 16/9535

(54) **IMAGE-BASED OBJECT DETECTION AND PROCESSING FOR ACTION MAPPING**

(30) Priority: 19.05.2025 US 202563808609 P; 23.10.2025 US 202563904485 P; 03.12.2025 US 202519408317
(71) Applicant: Apple Inc., Cupertino, CA 95014 (US)
(72) Inventor: BERGET, Erik M., Cupertino, 95014 (US); DIXON, Ryan S., Cupertino, 95014 (US); DEHGHAN, Afshin, Cupertino, 95014 (US); SIBLINI, Aya, Cupertino, 95014 (US); MUNECHIKA, David A., Cupertino, 95014 (US); GRIFFITHS, David N., Cupertino, 95014 (US); VERMA, Eshan, Cupertino, 95014 (US); ZHONG, Guangyu, Cupertino, 95014 (US); SHARMA, Vinay, Cupertino, 95014 (US)
(74) Representative: Zacco Denmark A/S

(57) **Abstract**

The subject technology relates to processing visual content to generate and rank contextually relevant actions. An input image received at an electronic device is processed by a first machine learning model to detect one or more elements, including objects or textual portions within the visual content. Based on the detected elements, a set of candidate actions is generated for processing at least a portion of the image. The candidate actions are ranked using a ranking data structure that incorporates multiple ranking signals associated with contextual relevance, user interaction history, or content similarity. At least a subset of the ranked candidate actions is provided for display through a user interface of the electronic device for user selection. Selected actions may be executed locally or routed to network-connected services for additional processing.

## Description

### TECHNICAL FIELD

This disclosure relates generally to the field of image processing.

### BACKGROUND

Mobile electronic devices (e.g., smartphone) are popular and are often carried by users while performing daily, and/or recurring, tasks. Users often engage with these electronic devices for accessing, processing, and sharing information encountered in real world environments. For example, users may capture images of physical documents, products, packaging, menus, receipts, or handwritten notes to reference or store the associated information. However, converting such real-world content into structured digital data remains largely manual and time consuming.

### BRIEF DESCRIPTION OF THE DRAWINGS

Certain features of the subject technology are set forth in the appended claims. However, for the purpose of explanation, several aspects of the subject technology are set forth in the following figures.
FIG. 1 illustrates an example network environment according to aspects of the subject technology.
FIG. 2 illustrates an example computing architecture for a system according to aspects of the subject technology.
FIG. 3 illustrates an example data extraction pipeline to extract textual data from an image.
FIG. 4 illustrates an example data extraction pipeline to generate information associated with an element depicted in an image.
FIG. 5 illustrates an example user interface for generating and displaying information associated with an item depicted in an image.
FIG. 6 illustrates an example user interface for generating and displaying information associated with an item depicted in an image.
FIG. 7 illustrates an example machine learning model implemented for an example data extraction pipeline.
FIG. 8 illustrates a flowchart of an example process for extracting textual data from an image.
FIG. 9 illustrates a flowchart of an example process for processing an image to determine one or more relevant portions in the image.
FIG. 10 illustrates a flowchart of an example process for detecting an element in an image and inferring information associated with the detected element.
FIG. 11 illustrates an example data extraction pipeline to generate action mapping information associated with an element depicted in an image.
FIG. 12 illustrates an example user interface for generating action mapping information associated with an item depicted in an image.
FIG. 13 illustrates an example user interface for generating action mapping information associated with an item depicted in an image.
FIG. 14 illustrates a flowchart of an example process for detecting an element in an image and mapping an action to the detected element.
FIG. 15 illustrates a flowchart of an example process for detecting an element in an image and mapping an action to the detected element.
FIG. 16 illustrates a flowchart of an example process for detecting an element in an image and mapping an action to the detected element.
FIG. 17 illustrates an example electronic system with which aspects of the subject technology may be implemented in accordance with one or more implementations.

The details above in the Brief Description of the Drawings are intended to describe only some aspects relating to certain embodiments of the innovations herein and should not be deemed in any way limiting with respect to requiring or omitting any aspect for embodiments to be claimed or otherwise limiting the disclosure or embodiments keeping with its scope or spirit.

### DETAILED DESCRIPTION

The detailed description set forth below is intended as a description of various configurations of the subject technology and is not intended to represent the only configurations in which the subject technology can be practiced. The appended drawings are incorporated herein and constitute a part of the detailed description. The detailed description includes specific details for the purpose of providing a thorough understanding of the subject technology. However, the subject technology is not limited to the specific details set forth herein and can be practiced using one or more other implementations. In some implementations, structures and components are shown in block diagram form to avoid obscuring the concepts of the subject technology.

The subject system provides a framework for image processing and data extraction for images captured by and/or stored on a user device. The subject system is configured to process images containing various types of visual information including but not limited to, product packaging, posters, menus, business cards, and the like. The subject system may utilize a combination of image analysis and/or schema-based text recognition to identify, extract and format relevant textual data for storage, manipulation and integration with downstream tasks, applications, and/or processes. The extracted text may be structured in accordance with pre-defined information schemas that indicates the specific data attributes for the extracted data, enabling targeted data retrieval.

The subject system provides technical improvements, advantages, and/or benefits that enhance the efficiency, accuracy, and/or utility of structured data extraction from images. By using pre-defined information schema-based extraction methods, the subject system ensures that only contextually relevant textual data is identified and extracted, improving data precision, and reducing extraction of extraneous information, which may reduce the utilization of processing, power, and/or memory resources. By extracting textual information based on pre-defined information schemas, the subject system can also adapt to diverse commercial, industrial, and informational domains, without requiring additional user interaction and/or processing. The subject system can also be scaled by introducing additional information schemas and/or image types as needed, which ensures that the system can evolve alongside the user requirements and/or technological advancements without requiring substantial reconfiguration.

The subject system further facilitates seamless integration with downstream processing tasks, applications, and/or processes through the generation of structured outputs in standardized and/or pre-determined formats. For instance, contact details extracted from business cards can be formatted in a manner that allows them to be consumed and/or stored by, or on behalf of, a contacts application, automating what would otherwise be a manual data entry process. The subject system also improves operational efficiency by minimizing human intervention in data capture workflows through automated text recognition and extraction, which reduces the likelihood of manual errors and expedites the data extraction process, reducing memory, processing, and/or power utilization.

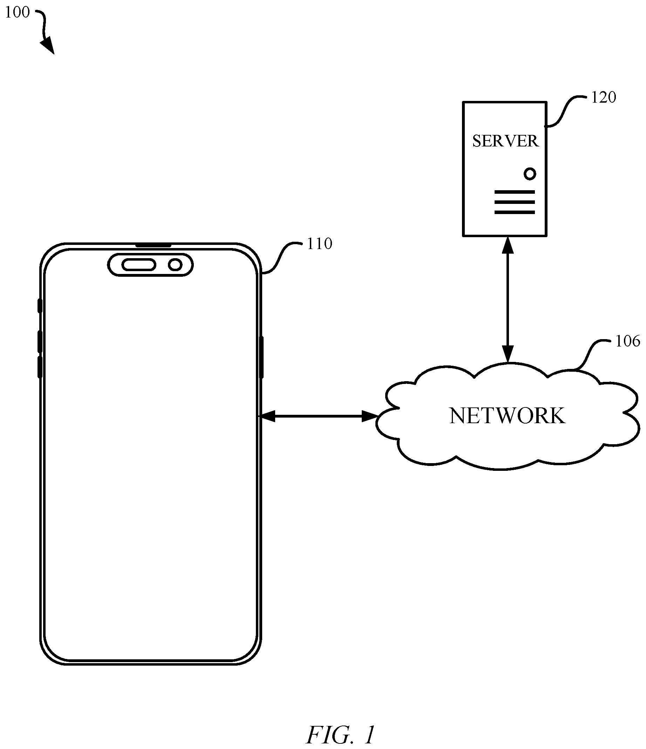

FIG. 1 illustrates an example network environment 100 in accordance with one or more implementations of the subject technology. Not all of the depicted components may be used in all implementations, however, and one or more implementations may include additional or different components than those shown in the figure. Variations in the arrangement and type of the components may be made without departing from the spirit or scope of the claims as set forth herein. Additional components, different components, or fewer components may be provided.

The network environment 100 includes an electronic device 110 (also referred herein to as an electronic device), and a server 120. The network 106 may communicatively (directly or indirectly) couple the electronic device 110 and/or the server 120. In one or more implementations, the network 106 may be an interconnected network of devices that may include, or may be communicatively coupled to, the Internet. For explanatory purposes, the network environment 100 is illustrated in FIG. 1 as including the electronic device 110, and the server 120; however, the network environment 100 may include any number of electronic devices and any number of servers.

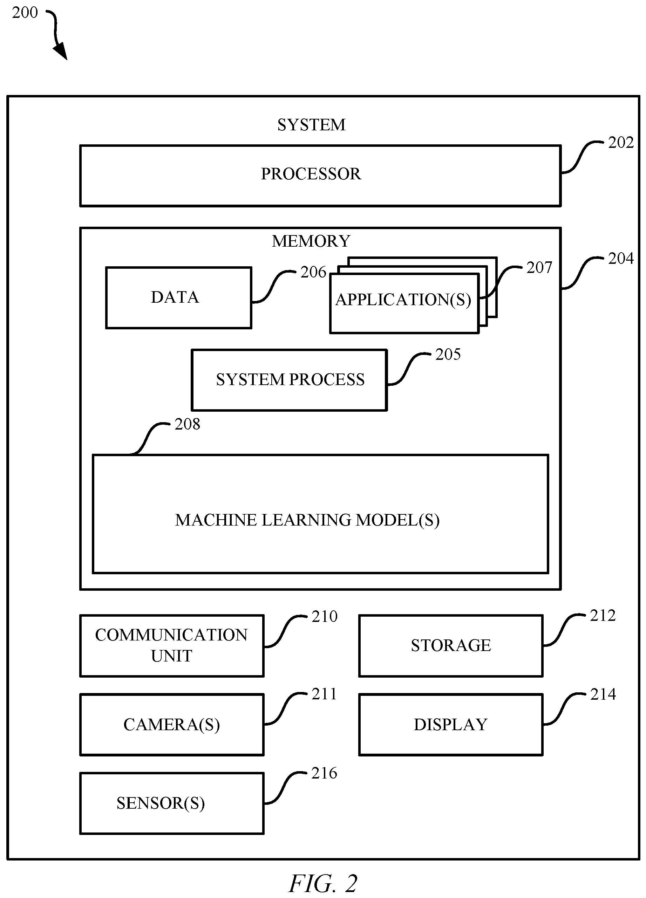

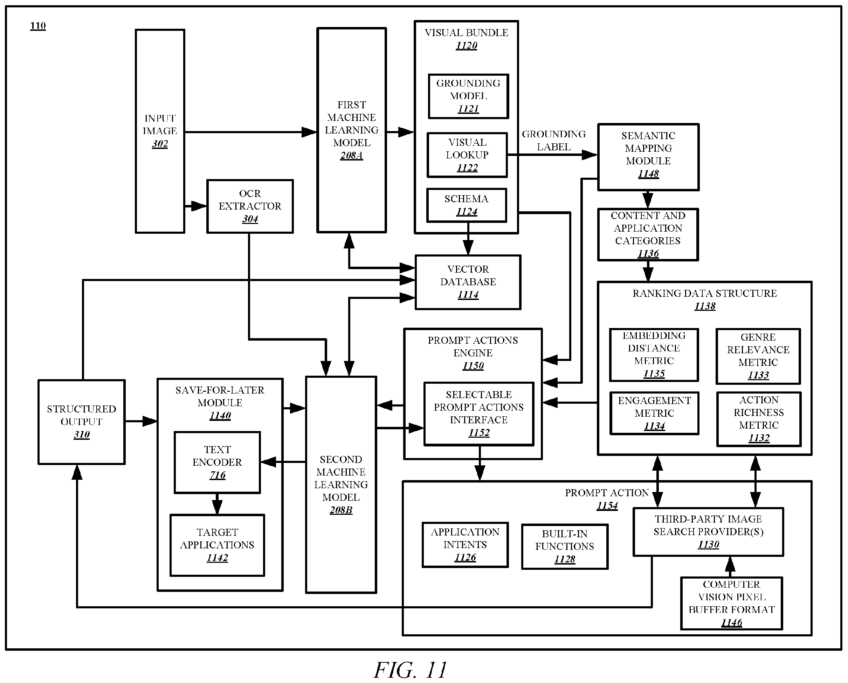

The electronic device 110 may be, for example, a desktop computer, a portable computing device such as a laptop computer, a smartphone, a peripheral device (e.g., a digital camera, headphones), a tablet device, a wearable device such as a watch, a band, and the like. In FIG. 1, by way of example, the electronic device 110 is depicted as a smartphone. The electronic device 110 may be, and/or may include all or part of, the systems discussed below with respect to FIG. 2 and/or FIG. 11.

In some implementations, the electronic device 110 may provide a system for training a machine learning model using training data, where the trained machine learning model is subsequently deployed locally at the electronic device 110. Further, the electronic device 110 may provide one or more frameworks for training machine learning models and/or developing applications using the machine learning models. In an example, the electronic device 110 may be an electronic device (e.g., a smartphone, a tablet device, a laptop computer, a desktop computer, a wearable electronic device, etc.) that can be used to communicate with entities like friends, family, colleagues.

In some implementations, a server 120 may provide a platform to train one or more machine learning models for deployment to the electronic device 110. The machine learning models deployed on the electronic device 110 may then perform one or more machine learning tasks. In some implementations, the server 120 may provide a cloud service that utilizes the trained machine learning model and is continually refined over time. The server 120 may be, and/or may include all or part of, the systems discussed below with respect to FIG. 2 and/or with respect to FIG. 11.

FIG. 2 illustrates an example system 200 in accordance with some implementations of the subject technology. In an example, the system 200 may be implemented in the electronic device 110 or the server 120, or partially in both. In another example, the system 200 may be implemented either in a single device or in a distributed manner in a plurality of devices, the implementation of which would be apparent to a person skilled in the art.

In an example, the system 200 may include a processor 202, memory 204 (memory device) and a communication unit 210. The memory 204 may store data 206 and one or more machine learning models 208A. In an example, the system 200 may include or may be communicatively coupled with a storage 212. Thus, the storage 212 may be either an internal storage or an external storage. In the example of FIG. 2, the system 200 includes one or more camera(s) 211, a display 214, and one or more sensors(s) 216. Sensor(s) 216 may include location sensors (e.g., satellite positioning system sensors), motion sensors (e.g., inertial sensors), and/or depth sensors (e.g., stereo cameras, LIDAR sensors, radar sensors, time-of-flight sensors, or the like).

In an example, the system 200 may execute a system process 205 or service that performs core and/or auxiliary functions within the system 200. The system process 205 may perform operations such as sensor data acquisition, real-time processing of inputs from camera(s) or sensor(s) 216, machine learning inferences, communication handling and user interface rendering. The system process is typically managed by an operating system (OS) of the system 200 and is different from one or more applications 207 executing in the system 200. In one or more implementations, the system process may interact with the one or more applications 207 using an application programming interface (API). In one or more implementations, the system process may be an operating system process or daemon.

In an example, the processor 202 may be a single processing unit or multiple processing units. The processor 202 may be implemented as one or more microprocessors, microcomputers, microcontrollers, digital signal processors, central processing units (CPUs), graphics processing units (GPUs), neural processors, specialized processors, e.g., for training and/or evaluating machine learning models, such as large language models, state machines, logic circuitries, and/or any devices that manipulate signals based on operational instructions. Among other capabilities, the processor 202 is configured to fetch and execute computer-readable instructions and data stored in the memory 204.

In an example, the communication unit 210 may include one or more hardware units that support wired or wireless communication between the processor 202 and processors of other computing devices, and/or for communication over a telecommunication network.

The memory 204 may include any non-transitory computer-readable medium known in the art including, for example, volatile memory, such as static random-access memory (SRAM) and dynamic random-access memory (DRAM), and/or non-volatile memory, such as read-only memory (ROM), erasable programmable ROM, flash memories, hard disks, optical disks, and magnetic tapes.

The memory 204 may include one or more applications 207 that are currently being executed on the system 200. The one or more applications 207 can interact with each other or with an operating system of the system 200 using application programming interfaces (API) to send or receive data. The one or more applications 207 can also include respective user interfaces (UI) to facilitate user-interaction, enabling the user to provide inputs and receive output seamlessly. For example, when implemented in the electronic device 110, the system 200 can execute a messaging application that can provide a UI to receive inputs from the user of the electronic device 110.

The data 206 may represent, amongst other things, a repository of data processed, received, and generated by one or more processors such as the processor 202. One or more of the aforementioned components of the system 200 may send or receive data, for example, using one or more input/output ports and one or more communication units.

The machine learning (ML) models 208, in an example, may include one or more of machine learning models such as a first ML model 208A which is trained to process an input image to detect textual data depicted in the input image and analyze the textual data to determine a pre-defined information schema. In one or more implementations, the system pre-defined information schema is the template that specifies one or more data fields of textual data to be identified and extracted from an input image. Each schema defines a set of data fields relevant to a particular type of document or visual media and provides a contextual blueprint of how the extracted text should be interpreted and organized. For example, in case of a business card, the schema may include data fields such as "name," "job," "title," "company," "phone number," "e-mail address," "websites," and "physical address." These fields represent the most common and meaningful categories of data found on business cards. Similarly, a schema associated with product packaging can include data fields such as "product name," "brand," "ingredients," "nutritional information," "net quantity," "manufacturing date," "expiration date," and "manufacturing details." Similarly, schema associated with a promotional poster may define fields such as "event," "name," "date," "time," "venue," "organizer," "call to action," and "contact information." Each of these schemas may correspond to a distinct content domain specifying one or more data fields for extraction from the input images.

The one or more of machine learning models can also include a second ML model 208B which is trained to process an input image to extract textual data present in the input image. In one or more implementations, the second ML model 208B is a large language model (LLM) implemented using a transformer based neural network architecture and trained on a corpus to infer descriptions associated with one or more topics. For example, the second ML model 208B can be used to generate information regarding a particular food item, a recipe, etc. In other embodiments, the second ML model 208B is configured to extract textual data present in the input image and generate inferred descriptions. In one or more implementations, the first ML model 208A and the second ML model 208B can be supervised, semi-supervised, or unsupervised. The first ML model 208A and the second ML model 208B may be based on regression learning, reinforcement learning, decision trees, random forest, support vector machines, neural networks, a diffusion-based synthesis model or any suitable learning algorithms. As an example, and not by way of limitation, the neural-network based models may comprise one or more of transformers neural-networks, long-short term memory units, or recurrent neural networks, or any combination thereof.

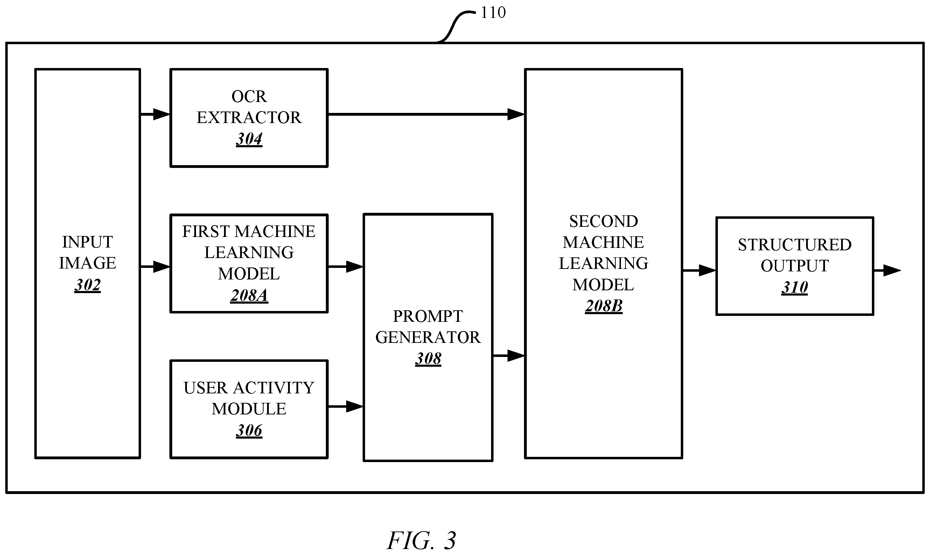

FIG. 3 is an example of a data extraction pipeline implemented by the system process 205 to extract textual data from an input image 302 captured using the camera of the electronic device 110 or obtained from data 206 of the electronic device 110. The input image 302 can include an image depicting, for example, a business card, a poster, a product package, unpackaged food, a menu, a receipt, a shopping list, a to-do list, readings from a health monitoring or testing device (e.g., a weight monitor, a glucose monitor etc.,) booking information (e.g., hotel, flight, parking, etc.), or the like. The data extraction pipeline of the system process 205 can include an (Optical Character Recognition) OCR extractor 304 implemented using a rule based engine or a machine learning model for detecting and extracting textual content present in the input image 302. In one or more implementations, detected text from the OCR extractor 304 is provided as input to the second ML model 208B as an additional parameter for detecting and extracting textual data. The data extraction pipeline can include the first ML model 208A which is trained to process an input image 302 to detect textual data present in the input image and analyze the textual data to determine a pre-defined information schema. The data extraction pipeline can include the second ML model 208B, which is trained to process an input image to extract textual data depicted in the input image to generate a structured output 310. The data extraction pipeline also includes a prompt generator 308 which is used to generate queries for the second ML model 208B based on the output of the first ML model 208A and the pre-defined information schema selected by the first ML model 208A. The data extraction pipeline also includes a user activity module 306 which provides information associated with the user's activity and its relationship with the input image 302. The techniques and methods implemented by the data extraction pipeline is further described below.

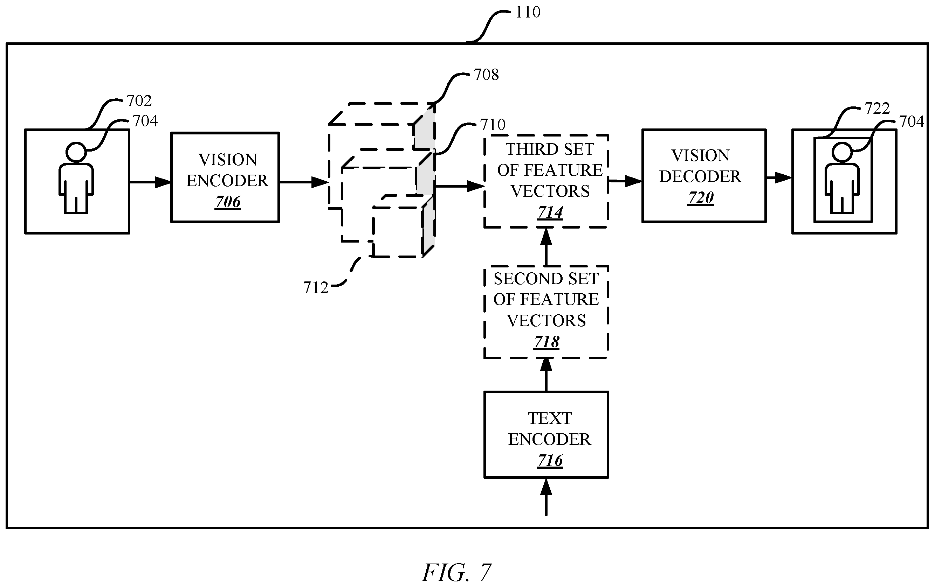

In one or more implementations, after receiving the input image 302, the first ML model 208A can process the input image 302 to detect textual data depicted in the image. In one example, the first ML model 208A may be implemented as a convolutional neural network (CNN) integrated with attention mechanisms that perform attention-based processing on regions of the input image containing text and infer one or more attributes (e.g., data types, data values, keywords) associated with the textual data present in the input image 302. In yet another example the first ML model 208A maybe implemented as a transformer-based model (e.g., a vision transformer or a hybrid visual language model) to learn complex textual relationships between detected text segments in the input image. In yet another example, the first ML model 208A may operate as an ensemble model combining outputs from multiple specialized sub-models trained on distinct image categories. Each sub-model may be optimized for a particular domain (e.g., health device readings, booking confirmations, menus, hand-written to-do lists) to infer one or more attributes associated with the textual data present in the image. The first ML model 208A is further described with reference to FIG. 7.

In one or more implementations the first ML model 208A is configured to process the input image to generate one or more contextual attributes and one or more textual attributes associated with the textual content present in the input image. The contextual attributes can include high level semantic and positional characteristics that define the relationship of the textual data with the surrounding visual or structural components within the input image. These attributes may include but are not limited to, spatial layout patterns, text grouping, proximity to graphical elements, color or background association, region specific density of text, etc. The one or more textual attributes can include intrinsic properties of the recognized text segments and may include for example - font style, size, text orientation, language, lexical content, keywords. In certain embodiments, the first ML model 208A may also use attention-based mechanisms (e.g., transformer based models) to capture both local and global dependencies between textual elements and surrounding visual characteristics, enhancing its ability to generate accurate contextual and textual attributes.

In one or more implementations, the system process can use the one or more contextual attributes and the one or more textual attributes generated by the first ML model 208A to select a pre-defined information schema for the input image. In one or more implementations, each pre-defined information schema specifies a structured template comprising one or more data fields relevant to a particular type of document or visual content (e.g., business card, product packaging, event poster, health device, etc.) By comparing textual attributes of the detected textual data with schema specific data fields, the system process 205 can select the appropriate schema. In one or more implementations, each pre-defined information schema is also associated with one or more contextual attributes such as domain type, data type constraints, lexical cues, etc. In such embodiments, the system process 205 can compare the contextual attributes associated with the pre-defined information schemas with the one or more contextual attributes associated with the textual content present in the input image 302 to select the most contextually relevant appropriate schema.

In one or more implementations, the first ML model 208A can process the input image 302 to identify one or more portions of the input image that contain textual content that is deemed relevant based on the one or more contextual attributes and the one or more textual attributes. For example, if the image depicts a hotel booking confirmation, the first ML model 208A may prioritize regions containing dates, addresses, reservation numbers while ignoring promotional text. As for another example, assume that the input image depicts the front and back of a packaged food product captured by the camera of the electronic device 110. The first ML model 208A can analyze the spatial arrangement of text blocks, font (e.g., bolded brand names), and lexical cues (e.g., ingredients, net-weight, calories, etc.,) to identify relevant portions of textual data. For example, the first ML model 208A can infer that the bold central phrase like "organic almond butter" corresponds to the product name, while textual data such as slogans are discarded. Subsequently, the system process 205 can identify portions of the input image that include relevant portions of textual data.

In one or more implementations, after identifying the one or more portions of the input image 302 that include the relevant portions of textual data, the system process 205 can crop or isolate the corresponding portions of the input image to generate a refined set of visual inputs. These cropped portions of the input image are then provided as input to the second ML model 208B for structured data extraction, limiting the scope of the data extraction performed by the second ML model 208B to meaningful content.

In one or more implementations, the user activity module 306 is configured to capture and provide metadata associated with the user activity at the time the input image is acquired or processed. For example, the user activity module 306 can identify the application or the interface (e.g., a user interface) through which the input image 302 was captured or submitted for structured data exaction - such as the contact application, expense management platform, or document scanner - which can serve as an indicator of the intended use case of the application or the interface. In some implementations, the user activity module 306 can also receive user input specifying a downstream application or service in which the structured output 310 is intended to be used. For example, a user may designate that the structured output 310 is to be exported to a calendar application, or a notes application. The user activity module 306 can provide such user inputs, or an indication of the application (or interface) through which the input image was captured or submitted to the prompt generator 308 for tailored query generation according to the use case of the structured output 310.

In one or more implementations, the prompt generator 308 is configured to receive as input, data related to the user activity and an indication of the pre-defined information schema selected by the first ML model 208A. The prompt generator 308 can use the input to generate a query tailored for querying the second ML model 208B for the extraction of textual data. In one or more implementations, the query can also include the one or more cropped portions of the input image that contained relevant portions of textual data as identified by the first ML model 208A. These one or more portions of the input image may be embedded in or referenced by the query to guide the extraction process. In other embodiments, the one or more portions of the input image may be provided directly to the second ML model 208B, either in place of or alongside the generated query for the extraction of textual data.

In one or more implementations, the system process can use the second ML model 208B to extract textual data from the one or more cropped portions of the input image 302 based on the query generated by the prompt generator 308 and the selected pre-defined information schema. The query can provide instructions that describe the type of data to be extracted (e.g., names, dates, etc.) while the one or more cropped portions of the input image provide the visual text from which the textual data is to be extracted. In one or more implementations, the second ML model 208B can use a multimodal architecture that can process both image and text inputs. The second ML model 208B can encode the one or more cropped portions of the input image using a visual feature extractor (e.g., a convolutional neural network or a vision transformer) which converts the one or more cropped portions of the input image into numerical representations. The query is then executed against the second ML model 208B to understand the one or more attributes of the selected pre-defined information schema and process the numerical representations to extract textual data as specified by the selected pre-defined information schema.

In one or more implementations, the second ML model 208B is implemented as a neural network architecture incorporating multiple adapters, where each adapter is a modular sub-network trained for a specific domain or use case (e.g., business cards, receipts, product packaging, health reports, etc.) These adapters allow the second ML model 208B to adapt the textual data extraction process depending on the input context without re-training the entire model. The system process 205 can dynamically select and activate a specific adapter configuration within the second ML model 208B based on signals from the user activity module 306 encoded in the query generated by the prompt generator 308 which captures information such as the application in use or the user specific intent. For example, assume that the user initiates a textual extraction task within an expense management application on the system process 205. Upon receiving the input image, which depicts a restaurant receipt, the user activity module 306 can identify the application providing the input image. The user activity module 306 can provide the indication of the application used by the user to provide the input image 302 to the prompt generator 308. In response, the prompt generator 308 can embed the indication of the application used by the user into the query generated by the prompt generator 308. When the second ML model 208B processes the query, the second ML model 208B can select the corresponding adapter module within the second ML model 208B which is specifically trained for the domain of receipt processing. In other embodiments, an adapter module may be selectively loaded into the second ML model 208B to enable the second ML model 208B to perform textual data extraction from the input image 302. For example, the system process 205 can pre-process the query to determine one or more adapters and load the one or more adapters into the second ML model 208B. The adapter may be selected by the system process 205 based on the selected predefined schema information schema, the one or more textual attributes and one or more contextual attributes of the textual data present in the input image 302 and the domain or use case (e.g., business cards, receipts, product packaging, health reports, etc.)

In one or more implementations the second ML model 208B can process the query generated by the prompt generator 308 and the one or more portions of the input image to extract textual data in the form of the structured output 310. The structured output 310 can be in the form of a data structure formatted in accordance with the pre-defined information schema selected by the first ML model 208A. The data structure organizes the extracted text into specific fields relevant to the selected schema. The structured output 310 is stored on the electronic device 110 either in local memory or a persistent storage medium, enabling subsequent access mission or export of the extracted data. For example, if input image is an image of a business card, the first ML model 208A can determine that the appropriate pre-defined schema corresponds to a business card format. The schema may define fields such as "name," "title," "company," "e-mail," "phone number" and optionally "website" and "address." Based on the selected schema and the query generated accordingly, the second ML model 208B analyzes the one or more cropped regions of the input image to extract semantically relevant text associated with each field specified by the selected schema. The structured output 310 generated from the image of the business card can be utilized by the system process 205 to create or update an entry within the contacts application on the electronic device 110.

As for another example, assume that the input image is a photograph of a digital blood pressure monitor display captured using the camera of the electronic device 110. The display shows key health metrics, including "systolic," "diastolic," "pulse," "unit" and "timestamp." After receiving the input image, the first ML model 208A can analyze the spatial layout, numerical formatting, and visual structure of the input image and selects a pre-defined information schema corresponding to the blood pressure reading. The first ML model 208A can identify one or more portions of the input image that include the relevant textual data (e.g., numerical values, labels such as "SYS", "DIA", "PULSE") and then filter out non relevant portions such as brand name or the UI icons on the device. Subsequently, the system process 205 can crop the portions of the image containing the detected health metrics. The one or more cropped portions of the image and the query generated by the prompt generator 308 are provided as input to the second ML model 208B. The second ML model can process the query to extract the textual data from the one or more cropped portions of the input image to generate a structured output 310 specifying the information displayed by the digital blood pressure monitor. For example, the structured output 310 can include data fields such as "systolic," "diastolic," "pulse," "unit" and "timestamp" and the respective values extracted from the input image such as "128," "82," "74," "mmHg," "2025-05-12-T08:42:00" respectively. The structured output 310 can then be stored by the electronic device 110 and maybe integrated into a personal health monitoring application, or transmitted to a healthcare provider, or synchronized with the medical record system depending on the user's preference or configured workflows.

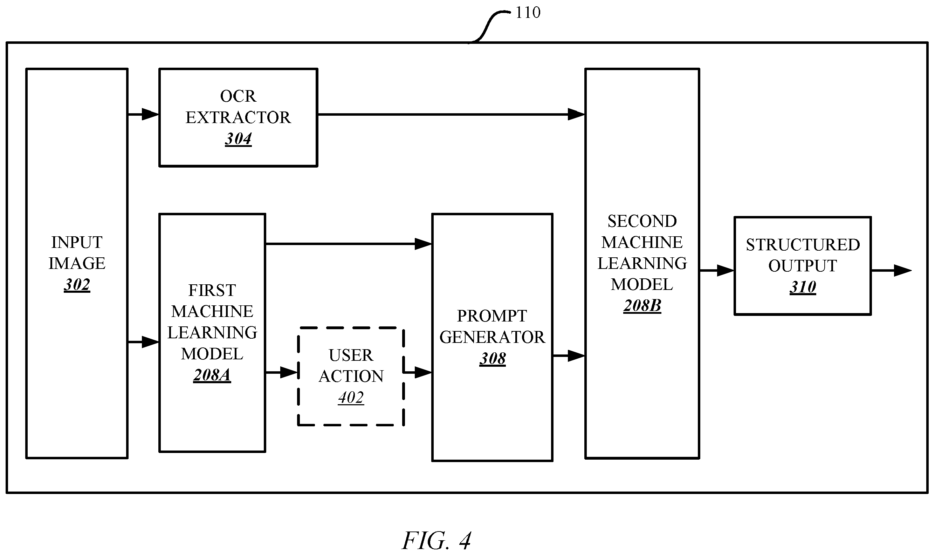

In one or more implementations, the data extraction pipeline can be further configured to display or generate information associated with one or more elements depicted in the input image. In such embodiments, the first ML model 208A can be configured to process the input image to detect and classify the one or more elements contained within the input image 302. These elements may include textual components such as portions of a menu or visual objects such as packaged or un-packaged food items (e.g., fruits, vegetables, and prepared meals.) Upon detecting an element within the input image 302, the first ML model 208A can classify the element depicted in the image into the type of category of the element. For example, the first ML model 208A may classify an element into "menu," "packaged food item," or "unpackaged food item." In response the prompt generator can generate a query based on the classification of the element, to infer information from the second ML model 208B associated to the element depicted in the input image and based on the classification generated by the first ML model 208A. Subsequently, the second ML model 208B can generate information regarding the element depicted in the input image 302 and/or extract data from the input image to generate a structured output 310. The techniques and methods are described with reference to FIG. 4.

FIG. 4 is an example of a data extraction pipeline implemented by the system process 205 to generate information associated with an element depicted in the input image and/or extract textual data from an input image 302. The input image 302 can depict an element such text or object or both. For example, the input image can depict a menu, packaged food item, or unpackaged food item.

In one or more implementations, the first ML model 208A can process the input image to detect and classify elements depicted in the input image. These elements can include both textual content (e.g., a section of a menu or receipt) and visual objects (e.g., packaged, or unpackaged food items.) The first ML model 208A can analyze the structure, layout, and visual features of the input image to identify portions of the image that depict meaningful content. For example, the first ML model 208A can detect that a particular portion of the input image contains text and in response, can classify it as "menu". As for another example, the first ML model 208A can determine that the input image depicts an item like an apple or a plate of salad. In response, the first ML model 208A can classify the element as an "un-packaged food item". As for another example, the first ML model 208A can determine that the input image depicts an item like a bag of chips, and in response, the first ML model 208A can classify the element as "packaged food item".

In one or more implementations, when the first ML model 208A determines that the element depicted in the input image 302 corresponds to textual content, the system process 205 can be configured to generate and display a user interface (UI) that allows the user to interact with the recognized textual elements. Specifically, the UI may be configured to enable the user to select a portion of the textual content for which the user intends to receive additional information or initiate a data extraction process. For example, if the first ML model 208A classifies an element depicted in the input image as "menu," the system process 205 can render an interactive UI displaying the input image and allowing the user to interact with the UI such as by tapping or touching the display of the electronic device 110. The user can use the UI to select a specific food item listed in the menu. In response to receiving the user input 402 such as a selection of an item by the user via the UI, the system process 205 uses the selected item as input to the prompt generator 308 along with the indication of the classification of the element generated by the first ML model 208A to generate a query for the second ML model 208B.

In one or more implementations, the prompt generator 308 can use the input to generate a query tailored for querying the second ML model 208B for inferring information associated with selected item from the input image 302. In one or more implementations, the query can also include the one or more cropped portions of the input image that include additional text (e.g., text describing the food item in the menu) or images of the food item depicted in the input image 302. The one or more portions of the input image may be embedded in or referenced by the query to guide the extraction process. In other embodiments, the one or more portions of the input image 302 may be provided directly to the second ML model 208B, either in place of or alongside the generated query for the extraction of textual data.

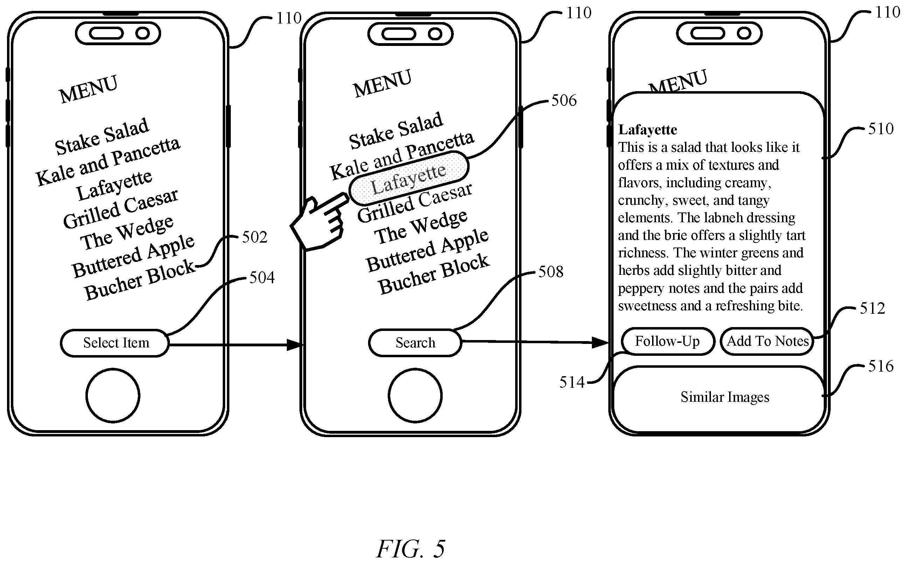

In one or more implementations, the second ML model 208B can process the query to retrieve or generate information associated with the selected text from the input image 302. After receiving the query, the second ML model 208B can process the query in conjunction with a trained knowledge base, an external data source or a pre-trained language model to infer or retrieve detailed information associated with the selected item. For example, if the selected item is a food item from the image of the restaurant menu (e.g., "Lafayette,") the second ML model 208B may return a structured output 310 describing the food item "Lafayette." The description can also include the nutritional content, typical ingredients, allergen data, recipes, common dietary classification (e.g., gluten free, low carb) and preparation methods of the food item "Lafayette." The structured output 310 can then be presented to the user through the electronic device 110 or integrated into a downstream application such as health tracking or dietary planning application. The UI associated with generating and displaying information associated with a food item listed in a restaurant menu is explained with reference to FIG. 5.

As for another example, if input image 302 depicts a bowl of fruits, the first ML model 208A can detect and classify the element depicted in the input image 302 as an "un-packaged food item." In this case, the prompt generator 308 can receive an indication of the classification generated by the first ML model 208A, and subsequently generate a query to generate or infer information associated with the bowl of fruits depicted in the input image 302. In this case, the query can also include the one or more cropped portions of the input image 302 depicting the bowl of fruits. These one or more cropped portions of the input image 302 may be embedded in or referenced by the query to guide the inference process. In other embodiments, the one or more cropped portions of the input image 302 may be provided directly to the second ML model 208B, either in place of or alongside the generated query.

In one or more implementations, the system process can provide the query to the second ML model 208B to process one or more cropped portions of the input image 302 to first determine the element depicted in the input image 302. In response to determining the element depicted in the cropped portions of the input image, the second ML model 208B can infer and/or generate information associated with the element using the trained knowledge base, the external data source, or the pre-trained language model. Continuing with the example of the input image 302 depicting a bowl of fruits, the second ML model 208B can generate a structured output 310 that can include information such as the estimated food type (e.g., mixed bowl of fruit), typical ingredients (e.g., banana, grapes, etc.,) nutritional content (e.g., calorie estimate, carbohydrate, sugar content, portion size) and dietary classifications (e.g., vegan, gluten free.) The structured output 310 can then be displayed to the user via the UI or stored for integration with applications such as dietary tracking, meal planning or health monitoring applications.

FIG. 5 illustrates an example user interface (UI) provided by the electronic device 110 to generate and display information associated with the menu depicted in the input image 302. As shown in FIG. 5, the system process 205 displays an image 502 of a physical restaurant menu that is currently being captured by a camera or image sensor of the electronic device 110. The UI includes a UI element 504 that indicates to the user that food items from the displayed image 502 of the menu are selectable. In response to this query, the user may select a food item, such as "Lafayette" as illustrated by the shaded region 506.

Upon selection of the food item "Lafayette," the UI presents a UI element 508 that allows the user to initiate a search for the selected item "Lafayette." If the user interacts with the UI element 508, the system process 205 generates information related to the selected food item and displays this information such as a brief description of the selected food item "Lafayette" via a UI element 510. The UI may further include a UI element 512 that enables the user to save the generated information into a note taking application.

Additionally, the UI can present a UI element 514 to allow the user to request further information regarding the selected item. For instance, the user may input questions and/or queries via a UI element 514, which are then processed by the second ML model 208B to generate further information related to the selected food item "Lafayette." Furthermore, the UI can display images of the selected food item "Lafayette" either retrieved from the Internet or generated by the second ML model 208B via the UI element 516. While FIG. 5 depicts UI elements 512 through 516, it should be understood that the UI may support additional functionalities, including but not limited to, initiating a web-based search for the selected food item, or prompting the user to provide feedback or reviews pertaining to the restaurant associated with the menu.

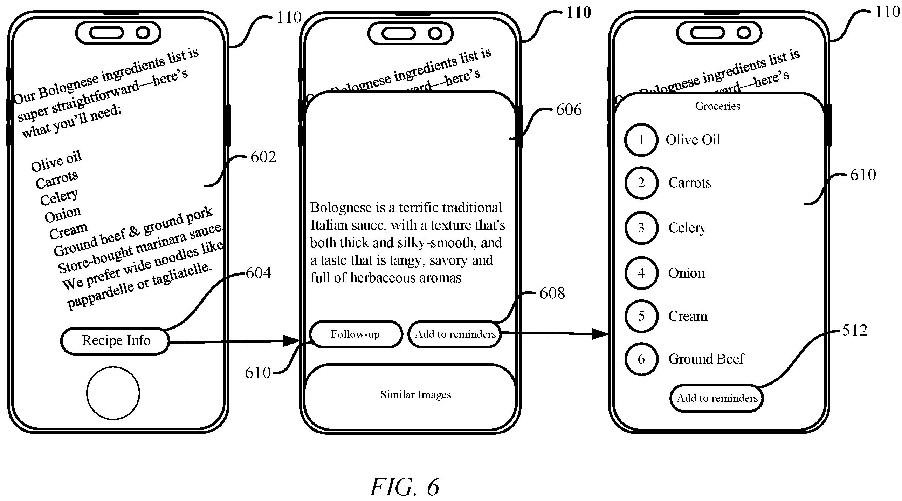

FIG. 6 illustrates an example user interface (UI) presented by the system process 205 for a data extraction pipeline configured to generate and display information associated with the recipe depicted in the input image 302. As shown in FIG. 5, the system process 205 displays an image 602 of the recipe. The UI includes a UI element 604 that indicates to the user that the user can request and/or obtain additional information associated with the recipe. If the user interacts with the UI element 604, the system process 205 generates information related to the recipe and displays this information such as a brief description of the recipe via a UI element 604. If the user interacts with the UI element 604, the system process 205 can inform information associated with the recipe using the second ML model 208B and display the information using the UI element 606.

In one or more implementations, the UI can also present a UI element 608 to process the textual information depicted in the input image 602 to parse the ingredients required for the recipe and to add a list of ingredients in a reminder application. For example, if the user interacts with the UI element 608, the second ML model 208B can extract the recipe from the input image 602 and add the list of ingredients in the grocery list of the reminder application. For example, the UI can display the list of ingredients using an UI element 610 which can be stored in the reminder application using the UI element 512. The UI can also present a UI element 610 to allow the user to request further information regarding the selected item. For instance, the user may input questions via a UI element 610, which are then processed by the second ML model 208B to generate further information related to the recipe.

As described above, the first ML model 208A is configured to perform a preliminary image analysis within the data extraction pipeline. The first ML model processes the input image and identifies one or more elements contained therein. These elements may include textual content - such as menus, receipts, or business cards - as well as visual objects including packaged food items, unpackaged food items, or electronic device displays. The first ML model 208A analyzes the input image based on its visual structure, spatial organization, and contextual features to detect regions of interest that may contain relevant data. Following the detection, the first ML model 208A classifies the detected element into one or more pre-defined categories. Classification categories may include but are not limited to "menu," "receipt," "packaged food item," and "unpackaged food item." The first ML model is described below with reference to FIG. 7.

FIG. 7 is an example of the first ML model 208A implemented by the system process 205 for the data extraction pipeline. In one or more implementations, the first ML model 208A may include a vision encoder 706 configured to process an image 702 to generate a corresponding feature map. The vision encoder 706 is configured to extract and encode visual characteristics of the image 704 transforming raw pixel data of the image 704 into structured representation that captures spatial and semantic data of the image 704. In one or more implementations, the vision encoder 706 is configured to generate feature maps of varying spatial resolutions and channel depths depending on the stage of processing within the vision encoder. For example, the vision encoder 706 may produce a feature maps with dimensions 80 x 80 x 128, where the spatial resolution is 80 x 80 pixels, and each spatial location is represented by 128-dimensional feature vector. At a deeper stage in the vision encoder 706 the spatial resolution may progressively reduce while the number of feature downloads increases, resulting in feature maps such as 40 x 40 x 256 and 20 x 20 x 512.

In one or more implementations, the vision encoder 706 includes multiple sequential processing stages each processing stage including one or more convolution neural network layers. At an early stage of processing, the vision encoder 706 may apply a series of convolutions with relatively small receptive fields (e.g., 3 x 3 kernels) to extract low level features such as edges, textures, and color gradients. The resulting feature map 708 at this stage may exhibit dimensions 80 x 80 x 128, where the spatial resolution is 80 pixels by 80 pixels and each spatial location is associated with 128-dimensional feature vector. In another embodiment, the vision encoder 706 can include an intermediate processing stage in which the spatial resolution of the feature maps is progressively reduced via techniques such as strided convolution or pooling, while the feature depth is increased. For example, an intermediate stage of the vision encoder 706 may output a feature map 710 with dimensions 40 x 40 x 256, capturing mid-level visual features such as structural patterns. In yet another embodiment, the vision encoder 706 can include additional convolution blocks or residual connections configured to capture high level semantic features from the image 702. At this stage, the vision encoder 706 can generate a feature map 712 with dimensions such as 20 x 20 x 512. Together, these feature maps are referred to as a first set of feature vectors.

In each processing stage, the vision encoder 706 may further include additional components such as batch normalization layers, nonlinear activation functions (e.g., ReLU), and skip connections to facilitate efficient learning.

In one or more implementations, the vision encoder 706 may alternatively be implemented using a transformer-based architecture. In such embodiments, the image 702 is divided into fixed size patches, where each patch is flattened and projected into an embedding space of the transformer-based architecture, and positional information is encoded to preserve spatial relationships. The embeddings are then processed using self-attention layers and feed forward layers to generate a feature map of the image.

In one or more implementations, the system process 205 implementing the first ML model 208A can include a list (or a library) of pre-defined labels, each label corresponding to a unique element that may be depicted in the image. The labels may represent various object categories or semantic entities recognizable by the first ML model 208A. The labels can include for example, "cars," "human," "chair," "tree," "receipt," "menu," "packaged food item," "unpackaged food item," "electronic device display," etc.

In one or more implementations, the first ML model 208A may include a text encoder 716 which is configured to process the labels from the label library to generate a second set of feature vectors 718, where each feature vector from the second set of feature vector corresponds to a label from the label library. The text encoder 716 may be implemented using a transformer-based architecture, a recurrent neural network (RNN) or other learned embedding models capable of encoding discrete tokens into high dimensional continuous vector spaces. In one or more implementations, each output vector is a fixed dimensional real-valued array. For example, the text encoder 716 can encode each label from the pre-defined library into a 512-dimensional vector.

In one or more implementations, the first ML model 208A is configured to perform a concatenation operation between the first set of features generated by the vision encoder 706, and the second set of feature vectors generated by the text encoder 716, to generate a third set of feature vectors 714 allowing the first ML model 208A to jointly represent the visual features from the input image with every combination of label representations derived from the pre-defined label library. In one or more implementations, to perform concatenation, the first ML model 208A may combine each feature vector from the first set with each feature vector from the second set resulting in a pairwise concatenated vector. For example, given the first set of feature vectors with dimensions 80 x 80 x 128, 40 x 40 x 256 and 20 x 20 x 512 and assuming that the pre-defined label library includes N labels i.e., the second set of feature vectors include N vectors, the system process 205 can perform a pairwise concatenation to generate the third set of feature vectors 714 which includes (80 x 80 + 40 x 40 + 20 x 20) x N = 8400 x N feature vectors.

In one or more implementations, the first ML model 208A may include vision decoder 720 which is configured to process each feature vector of the third set of feature vectors 714 to generate a respective likelihood that indicates a relevance of an element associated with the respective feature vector with the element depicted in the input image. The vision decoder 720 can include one or more transformer layers, one or more fully connected neural network layers, normalization layers and dropout layers. In certain embodiments, the scalar output of the vision decoder 720 may be represented as a likelihood score, a confidence value, or a probability that the visual region associated with the feature vector corresponds to the element indicated by the label of the feature vector.

In one or more implementations, the system process 205 may be configured to determine that an element associated with a feature vector from the third set of feature vectors 714 is most likely present in the input image 702, based on the computed likelihood value. For example, the system process 205 may identify the element corresponding to the feature vector that is assigned the highest likelihood value as the element most likely depicted in the image 702.

In another embodiment, the system process 205 may compare the likelihood values assigned to feature vectors against a pre-determined threshold value. If the likelihood value of a given feature vector exceeds the pre-determined threshold value, the system process 205 may determine that the element associated with that feature vector is present in the image 702. If the likelihood values of one or more feature vectors meets or exceeds the pre-determined threshold value, the system process 205 may determine that the elements associated with each of the one or more feature vectors are likely present in the image 702, enabling the identification of one or more elements depicted in the image 702.

In one or more implementations, the vision decoder 720 is further configured to generate as output, one or more bounding boxes (e.g., bounding box 722) that spatially encapsulate the one or more elements determined to be depicted in the input image 702. Each bounding box defines a region within the image 702 which is determined to contain a visual element associated with a label from the pre-defined label library. The bounding box may be represented using a coordinate format (e.g., x_min, y_min, x_max, y_max) or other specifications suitable for identifying a portion in the image 702.

In one or more implementations, the system process 205 is configured to generate a corresponding data structure that stores information associated with the one or more elements depicted in the image 702. The data structure may include for example a label for identifying the type of element, a likelihood value indicating the confidence in the detection. Additionally, the system process 205 may store data identifying the bounding boxes (e.g., x_min, y_min, x_max, y_max) generated by the vision decoder 720. The electronic device 110 may also mark the one or more portions of the image 702 corresponding to the bounding boxes and store the identifiers or metadata associated with the cropped portions. In one or more implementations, electronic device 110 may crop the one or more portions of the image 702 and store the cropped portions, referenced by pointers, or encoded into a compact format for further processing.

In one or more implementations, the first ML model 208A may be trained using a supervised learning framework on a training data set that includes multiple labeled training images. Each training image may include one or more annotated elements, where each annotation includes a label (e.g., "menu," "receipt," "packaged food item," "unpackaged food item," "human," "animal," "object," etc.,) and corresponding coordinates of the bounding box that defines the spatial region occupied by the labeled element. The training process may involve optimizing the parameters of the vision encoder 706, the text encoder 716, and/or the vision decoder 720 to jointly minimize one or more loss functions. The loss functions may include but are not limited to a classification loss, a localization loss, a similarity loss, etc. During training, visual features extracted from the training images by the vision encoder 706 are concatenated with label embeddings produced by the text encoder 716 to generate a third set of feature vectors 714. The vision decoder 720 can process these vectors to predict a likelihood indicating a relevance of the elements associated with the feature vectors with the elements depicted in the training image and optionally the coordinates of the bounding boxes encapsulating the elements. The predictions are compared against ground truth annotations to compute the total loss, which is then back propagated to update the training parameters of the vision encoder 706, the text encoder 716 and the vision decoder 720 Using optimization algorithms such as stochastic gradient descent or Adam.

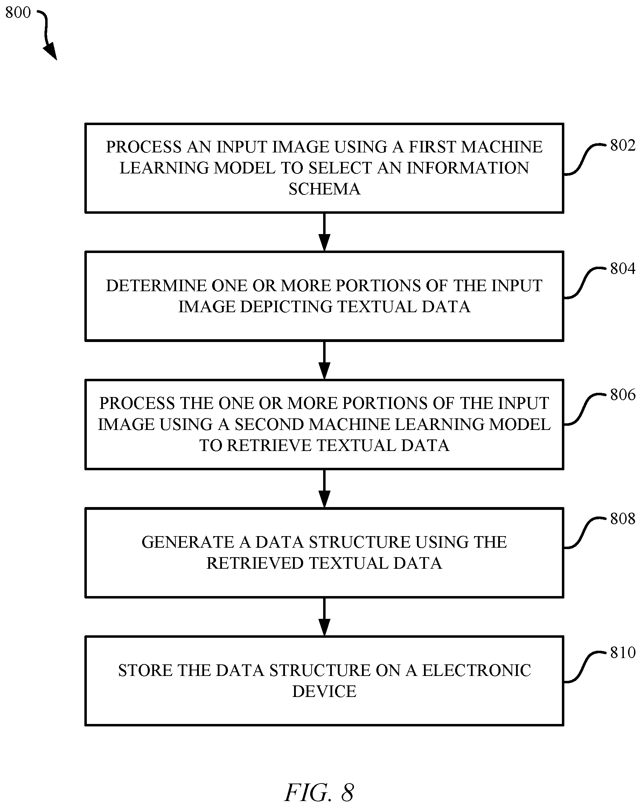

FIG. 8 is a flowchart illustrating an example process 800 for extracting textual data from an input image. For explanatory purposes, the process 800 is primarily described herein with reference to the electronic device 110 and server 120 of FIG. 1. However, the process 800 is not limited to the electronic device 110 and the server 120 of FIG. 1, and one or more blocks (or operations) of the process 800 may be performed by one or more other suitable devices. Further for explanatory purposes, the blocks of the process 800 are described herein as occurring in serial, or linearly. However, multiple blocks of the process 800 may occur in parallel. In addition, the blocks of the process 800 need not be performed in the order shown and/or one or more blocks of the process 800 need not be performed and/or can be replaced by other operations.

At block 802, the system process 205 receives an input image and processes the input image using a first ML model 208A to select an information schema. For example, the system process 205 implements a data extraction pipeline to extract textual data from an input image 302 captured using the camera of the electronic device 110 or obtained from data 206 of the electronic device 110. The input image 302 can include image depicting a business card, a poster, a product packaging, unpackaged food, a menu, a receipt, a shopping list, a to-do list, readings from a health monitoring or testing device (e.g., a weight monitor, a glucose monitor etc.,) or booking information (e.g., hotel, flight, parking, etc.) After receiving the input image, the first ML model 208A can process the input image to detect textual data depicted in the image. The first ML model 208A is configured to process the input image to generate one or more contextual attributes and one or more textual attributes associated with the textual content. The contextual attributes can include high level semantic and positional characteristics that define the relationship of the textual data with the surrounding visual or structural components within the input image. These attributes may include but are not limited to, spatial layout patterns, text grouping, proximity to graphical elements, color or background association, region specific density of text, etc. The one or more textual attributes can include intrinsic properties of the recognized text segments and may include for example - font style, size, text orientation, language, lexical content, keywords. In certain embodiments, the first ML model 208A may also use attention-based mechanisms (e.g., transformer based models) to capture both local and global dependencies between textual elements and surrounding visual characteristics, enhancing its ability to generate accurate contextual and textual attributes.

The system process 205 can use the one or more contextual attributes and the one or more textual attributes generated by the first ML model 208A to select a pre-defined information schema for the input image. Each pre-defined information schema specifies a structured template comprising one or more data fields relevant to a particular type of document or visual content (e.g., business card, product packaging, event poster, health device, etc.) The selection process may involve analyzing the contextual and textual attributes to determine the semantic domain, structural layout, and content type of the textual data present in the input image, which is then matched against the data fields specified by the one or more pre-defined information schemas stored in the electronic device 110. By comparing the contextual and textual attributes with schema specific data fields and domain-specific keywords, the first ML model 208A can select the most contextually appropriate schema.

At block 804, the system process 205 uses the first ML model 208A to determine one or more portions of the input image depicting textual data. For example, the first ML model 208A can process the input image 302 to identify one or more portions of the input image that contains textual data that is deemed relevant based on the one or more contextual attributes and the one or more textual attributes. For example, if the image depicts a hotel booking confirmation, the first ML model 208A may prioritize regions containing dates, addresses, reservation numbers while ignoring promotional text. As for another example, assume that the input image depicts the front and back of a packaged food product captured by the camera of the electronic device 110. The first ML model 208A can analyze the spatial arrangement of text blocks, font (e.g., bolded brand names), and lexical cues (e.g., ingredients, net-weight, calories, etc.,) to identify relevant portions of the textual data. For example, the first ML model 208A can infer that the bold central phrase like "organic almond butter" corresponds to the product name, while textual data such as advertisements and slogans are discarded. Subsequently, the system process 205 can identify the one or more portions of the input image that include relevant portions of the textual data.

In one or more implementations, after identifying the one or more portions of the input image 302 that include the relevant portions of the textual data, the system process 205 can crop or isolate the corresponding portions of the input image to generate a refined set of visual inputs. These cropped portions of the input image are then provided as input to the second ML model 208B for structured data extraction, limiting the scope of the data extraction performed by the second ML model 208B to data which is identified as relevant.

At block 806, the system process 205 processes the one or more portions of the input image using a second ML model to retrieve textual data. The user activity module 306 is configured to capture and provide metadata associated with the user activity at the time the input image is acquired or processed. For example, the user activity module 306 can record the identity of the application or the interface (e.g., a user interface) through which the input image was captured or submitted for structured data exaction - such as the contact application, expense management platform, or document scanner - which can serve as an indicator of the intended use case of the application or the interface. In some implementations, the user activity module 306 can also receive user input specifying a downstream application or service in which the structured output 310 is intended to be used. For example, a user may designate that the structured output 310 is to be exported to a calendar application, or a notes application. The user activity recorded by the user activity module 306 can be provided to the prompt generator 308 for tailored query generation according to the use case of the structured output 310.

The prompt generator 308 is configured to receive as input, information related to the user activity and an indication of the predefined information schema selected by the first ML model 208A. The prompt generator 308 can use the input to generate a query tailored for querying the second ML model 208B to extract textual data. In one or more implementations, the query can also include the one or more cropped portions of the input image that contained relevant portions of textual information as identified by the first ML model 208A.

The second ML model 208B is configured to extract textual data from the one or more cropped portions of the input image based on the query generated by the prompt generator 308 and the selected pre-defined information schema. The query can provide instructions that describe the type of data to be extracted (e.g., names, dates, etc.) while the one or more cropped portions of the input image provides the visual text from which the textual data is to be extracted.

The second ML model 208B can encode the one or more cropped portions of the input image using a visual feature extractor (e.g., a convolutional neural network or a vision transformer) which converts the one or more cropped portions of the input image 302 into numerical representations. The query is then executed against the second ML model 208B to learn the one or more attributes of the selected pre-defined information schema and process the numerical representations to extract textual data as specified by the selected pre-defined information schema.

In one or more implementations, the second ML model 208B is a transformer based neural-network. In other embodiments, the second ML model 208B can include multiple adapters, where each adapter is a modular sub-network trained for a specific domain or use case (e.g., business cards, receipts, product packaging, health reports, etc.)

At block 808, the system process 205 generates a data structure using the retrieved textual data. For example, the second ML model 208B can extract textual data in the form of the structured output 310. The structured output 310 can be in the form of a data structure formatted in accordance with the pre-defined information schema selected by the first ML model 208A. The data structure organizes the extracted text into specific fields relevant to the selected schema. The structured output 310 is stored on the electronic device 110 either in local memory or a persistent storage medium, enabling subsequent access mission or export of the extracted data. For example, if input image is an image of a business card, the first ML model 208A can determine that the appropriate predefined schema corresponds to a business card format. The schema may define fields such as "name," "title," "company," "e-mail," "phone number" and optionally "website" and "address." Based on the selected schema and the query generated accordingly, the second ML model 208B analyzes the one or more cropped regions of the input image to extract semantically relevant text associated with each field specified by the selected schema. The structured output 310 generated from the image of the business card can be utilized by the system process 205 to create or update an entry within the contacts application on the electronic device 110. In one or more implementations, the structure output can correspond to any data format, such as any application specific data format, which may be used on the electronic device 110.

As for another example, assume that the input image 302 is an image of a digital blood pressure monitor display captured using the camera of the electronic device 110. The display shows key health metrics, including "systolic," "diastolic," "pulse," "unit" and "timestamp." After receiving the input image, the first ML model 208A can analyze the spatial layout, numerical formatting, and visual structure of the input image and selects a pre-defined information schema corresponding to the blood pressure reading. The first ML model 208A can identify more portions of the input image that include the relevant textual information (e.g., numerical values, labels such as "SYS", "DIA", "PULSE") and then filter out non relevant portions such as brand name or the UI icons on the device. Subsequently, the system process 205 can crop the portions of the image containing the detected health metrics. Subsequently, the one or more cropped portions of the image and the query generated by the prompt generator 308 is provided as input to the second ML model 208B. The second ML model can process the query to extract the textual information from the one or more cropped portions of the input image to generate a structured output 310 specifying the information displayed by the digital blood pressure monitor. For example, the structured output 310 can include data fields such as "systolic," "diastolic," "pulse," "unit" and "timestamp" and the respective values extracted from the input image such as "128," "82," "74," "mmHg," "2025-05-12-T08:42:00" respectively.

At block 810, the system process 205 stores the data structure. For example, the structured output 310 generated from the image of the business card can be utilized by the system process 205 to create or update an entry within the contacts application on the electronic device 110. As for another example, the structured output 310 associated with the image of a digital blood pressure monitor display can be stored by the system process 205 and may be integrated into a personal health monitoring application, or transmitted to a healthcare provider, or synchronized with the medical record system depending on the user's preference or configured workflows.

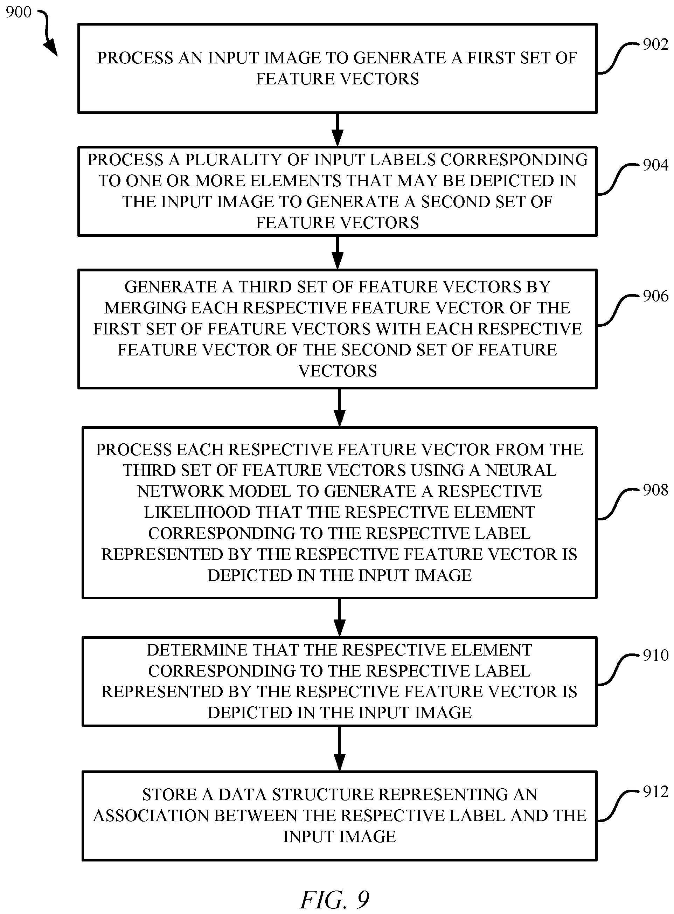

FIG. 9 is a flowchart illustrating an example process 900 for processing an input image using the first ML model 208A to determine one or more relevant portions of the input image. For explanatory purposes, the process 900 is primarily described herein with reference to the electronic device 110 and server 120 of FIG. 1. However, the process 900 is not limited to the electronic device 110 and the server 120 of FIG. 1, and one or more blocks (or operations) of the process 900 may be performed by one or more other suitable devices. Further for explanatory purposes, the blocks of the process 900 are described herein as occurring in serial, or linearly. However, multiple blocks of the process 900 may occur in parallel. In addition, the blocks of the process 900 need not be performed in the order shown and/or one or more blocks of the process 900 need not be performed and/or can be replaced by other operations.

At block 902, the first ML model 208A processes the input image to generate a first set of feature vectors. For example, the first ML model 208A may include vision encoder 706 configured to process an image 702 to generate a corresponding feature map. The vision encoder 706 is configured to extract and encode the visual characteristics of the image 704 transforming raw pixel data of the image 704 into structured representation that captures spatial and semantic information of the image 704. The vision encoder 706 is configured to generate feature maps of varying spatial resolutions and channel depths depending on the stage of processing within the vision encoder 706. The vision encoder 706 includes multiple sequential processing stages each processing stage including one or more convolution neural network layers. At an early stage of processing, the vision encoder 706 may apply a series of convolutions with relatively small receptive fields (e.g., 3 x 3 kernels) to extract low level features such as edges, textures, and color gradients. The resulting feature map 708 at this stage may exhibit dimensions 80 x 80 x 128, where the spatial resolution is 80 pixels by 80 pixels and each spatial location is associated with 128-dimensional feature vector. In another embodiment, the vision encoder 706 can include an intermediate processing stage in which the spatial resolution of the feature maps is progressively reduced via techniques such as strided convolution or pooling, while the feature depth is increased. For example, an intermediate stage of the vision encoder 706 may output a feature map 710 with dimensions 40 x 40 x 256, capturing mid-level visual features such as structural patterns. In yet another embodiment, the vision encoder 706 can include additional convolution blocks or residual connections configured to capture high level semantic features from the image 702. At this stage, the vision encoder 706 can generate a feature map 712 with dimensions such as 20 x 20 x 512. Together, these feature maps are referred to as a first set of feature vectors.

At block 904, the first ML model 208A processes input labels corresponding to one or more elements that may be depicted in the input image to generate a second set of feature vectors. For example, the system process 205 implementing the first ML model 208A can include a list (or a library) of pre-defined labels, each label corresponding to a unique element that may be depicted in the image. The labels may represent various object categories or semantic entities recognizable by the first ML model 208A. The labels can include for example, "cars," "human," "chair," "tree," "receipt," "menu," "packaged food item," "unpackaged food item," "electronic device display," or generally a label corresponding to any identifiable object. The first ML model 208A may include a text encoder 716 which is configured to process the labels from the label library to generate a second set of feature vectors 718, where each feature vector from the second set of feature vector corresponds to a label from the label library. The text encoder 716 may be implemented using a transformer-based architecture, a recurrent neural network (RNN) or other learned embedding models capable of encoding discrete tokens into high dimensional continuous vector spaces. In one or more implementations, each output vector is a fixed dimensional real-valued array. For example, the text encoder 716 can encode each label from the pre-defined library into a 512-dimensional vector.

At block 906, the first ML model 208A can generate a third set of feature vectors 714 by merging each respective feature vector of the first set of feature vectors with each respective feature vector of the second set of feature vectors. For example, the first ML model 208A is configured to perform a concatenation operation between the first set of features generated by the vision encoder 706, and the second set of feature vectors generated by the text encoder 716, to generate a third set of feature vectors 714 allowing the first ML model 208A to jointly represent and the visual features from the input image with every combination of label representations derived from the predefined label library. To perform concatenation, the first ML model 208A may combine each feature vector from the first set with each feature vector from the second set resulting in a pairwise concatenated vector. For example, given the first set of feature vectors with dimensions 80 x 80 x 128, 40 x 40 x 256 and 20 x 20 x 512 and assuming that the pre-defined label library includes N labels i.e., the second set of feature vectors include N vectors, the first ML model 208A can perform a pairwise concatenation to generate the third set of feature vectors 714 which includes (80 x 80 + 40 x 40 + 20 x 20) x N = 8400 x N feature vectors.

At block 908, the first ML model 208A can process each respective feature vector from the third set of feature vectors 714 using a neural network model to generate a respective likelihood that the respective element corresponding to the respective label represented by the respective feature vector is depicted in the input image. For example, the first ML model 208A may include vision decoder 720 which is configured to process each feature vector of the third set of feature vectors 714 to generate a respective likelihood that indicates a relevance of an element associated with the respective feature vector with the element depicted in the input image. The vision decoder 720 can include one or more transformer layers, one or more fully connected neural network layers, normalization layers and dropout layers. In one or more implementations, the scalar output of the vision decoder 720 may be represented as a likelihood score, confidence value or probability that the visual region associated with the feature vector corresponds to the element indicated by the label of the feature vector.

At block 910, the system process 205 may determine that the respective element corresponding to the respective label represented by the respective feature vector is depicted in the input image. For example, the system process 205 may determine that an element associated with a feature vector from the third set of feature vectors 714 is most likely present in the input image 702, based on the computed likelihood value. For example, the system process 205 may identify the element corresponding to the feature vector that is assigned the highest likelihood value as the element most likely depicted in the image 702.

In another embodiment, the system process 205 may compare the likelihood values assigned to feature vectors against a pre-determined threshold value. If the likelihood value of a given feature vector exceeds the pre-determined threshold value, the system process 205 may determine that the element associated with that feature vector is present in the image 702. If the likelihood values of one or more feature vectors meets or exceeds the pre-determined threshold value, the system process 205 may determine that the elements associated with each of the one or more feature vectors is present in the image 702, enabling the identification of multiple elements depicted in the image 702.

At block 912, the system process 205 stores a data structure representing an association between the respective label and the input image. For example, the system process 205 may be configured to generate a corresponding data structure that stores information associated with the one or more elements detected in the image 702. The data structure may include for example a label for identifying the type of element and/or a likelihood value indicating the confidence in the detection. Additionally, the system process 205 may store data identifying the bounding boxes (e.g., x_min, y_min, x_max, y_max) generated by the vision decoder 720. The system process 205 may also mark the one or more portions of the image 702 corresponding to the bounding boxes and store the identifiers or metadata associated with the marked one or more portions. In one or more implementations, system process 205 may crop the one or more portions of the image 702 and store the cropped portions, reference each cropped portion by pointers, or encode the cropped portions into a compact format for further processing.

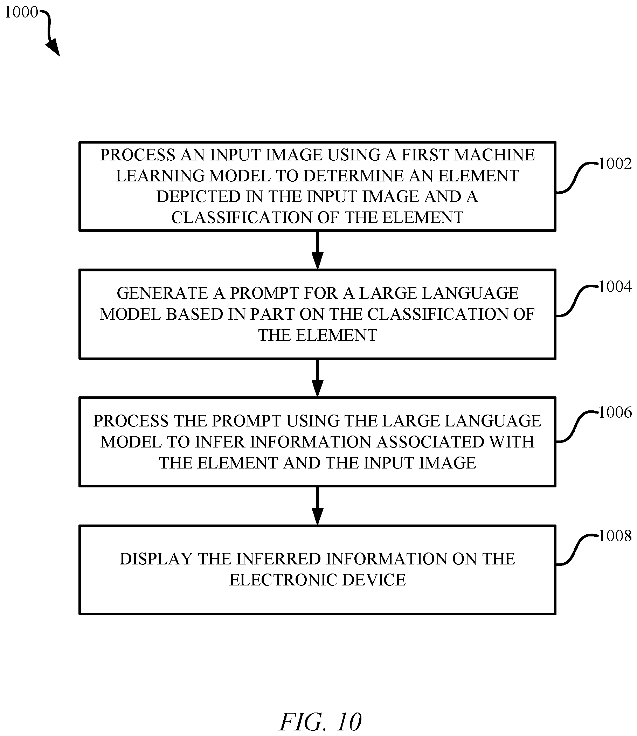

FIG. 10 is a flowchart illustrating an example process 1000 for detecting an element in an input image and inferring information associated with the detected element. For explanatory purposes, the process 1000 is primarily described herein with reference to the electronic device 110 and server 120 of FIG. 1. However, the process 1000 is not limited to the electronic device 110 and the server 120 of FIG. 1, and one or more blocks (or operations) of the process 1000 may be performed by one or more other suitable devices. Further for explanatory purposes, the blocks of the process 1000 are described herein as occurring in serial, or linearly. However, multiple blocks of the process 1000 may occur in parallel. In addition, the blocks of the process 1000 need not be performed in the order shown and/or one or more blocks of the process 1000 need not be performed and/or can be replaced by other operations.

At block 1002, the system process 205 can process an input image using a first ML model 208A to determine an element depicted in the input image and a classification of the element. These elements can include both textual content (e.g., a section of a menu or receipt) and visual objects (e.g., packaged, or unpackaged food items.) The first ML model 208A can analyze the structure, layout, and visual features of the input image to identify portions of the image that depict meaningful content. For example, the first ML model 208A can detect that a particular portion of the input image contains text and in response, can classify it as "menu". As for another example, the first ML model 208A can determine that the input image depicts an item like an apple or a plate of salad. In response, the first ML model 208A can classify the element as "un-packaged food item". As for another example, the first ML model 208A can determine that the input image depicts an item like a bag of chips, and in response, the first ML model 208A can classify the element as "packaged food item".

When the first ML model 208A determines that the element depicted in the input image 302 corresponds to textual content, the system process 205 can be configured to generate and display a user interface (UI) that allows the user to interact with the recognized textual elements. Specifically, the UI may be configured to enable the user to select a portion of the textual content for which the user intends to receive additional information or initiate a data extraction process. For example, if the first ML model 208A classifies an element depicted in the input image as "menu," the system process 205 can render an interactive UI displaying the input image and allowing the user to interact with the UI such as by tapping or touching the display of the electronic device 110. The user can use the UI to select a specific food item listed in the menu. As for another example, if input image 302 depicts a bowl of fruits, the first ML model 208A can detect and classify the element depicted in the input image 302 as an "un-packaged food item."

At block 1004, the system process 205 can generate a query for a large language model (LLM) based in part on the classification of the element. For example, the prompt generator 308 can use the input to generate a query tailored for querying the large language model (e.g., the second ML model 208B) for inferring information associated with selected item from the input image 302. In one or more implementations, the query can also include the one or more cropped portions of the input image that include additional text (e.g., text describing the food item in the menu) or images of the food item depicted in the input image 302. The one or more portions of the input image may be embedded in or referenced by the query to guide the extraction process. In other embodiments, the one or more portions of the input image 302 may be provided directly to the second ML model 208B, either in place of or alongside the generated query for the extraction of textual information.

At block 1006, the system process 205 can process the query using the large language model to infer information associated with the element and the input image. For example, the second ML model 208B can process the query to retrieve or generate information associated with the selected item from the input image 302. After receiving the query, the second ML model 208B can process the query in conjunction with a trained knowledge base, an external data source or a pre-trained language model to infer or retrieve detailed information associated with the selected item. For example, if the selected item is a food item from the image of the restaurant menu (e.g., "Lafayette,") the second ML model 208B may return a structured output 310 describing the food item "Lafayette,". The description can also include the nutritional content, typical ingredients, allergen data, recipes, common dietary classification (e.g., gluten free, low carb) and preparation methods of the food item "Lafayette."

At block 1008, the system process 205 can display the inferred information. For example, the structured output 310 can then be presented to the user through the system process 205 or integrated into a downstream application such as health tracking or dietary planning application. With reference to FIG. 5, if the user interacts with the UI element 508, the system process 205 generates information related to the selected food item and displays this information such as a brief description of the selected food item "Lafayette" via a UI element 510. The UI may further include a UI element 512 that enables the user to save the generated information into a note taking application.

Additionally, the UI can present a UI element 514 to allow the user to request further information regarding the selected item. For instance, the user may input questions via a UI element 514, which are then processed by the second ML model 208B to generate further information related to the selected food item "Lafayette." Furthermore, the UI can display images of the selected food item "Lafayette" either retrieved from the Internet or generated by the second ML model 208B via the UI element 516.

FIG. 11 illustrates an example data extraction pipeline implemented by the system process 205 to generate action mapping information associated with an element depicted in an image. In one or more implementations, an input image 302 may be captured, received, or otherwise provided to the electronic device 110. The input image 302 may contain visual content including objects, text, or combinations thereof, as illustrated in FIG. 4. The first ML model 208A may process the input image 302 to detect and classify elements, including textual portions and visual objects. Classification results from the first ML model 208A may contribute to generation of a visual bundle 1120 and subsequent downstream processing. The OCR extractor 304 may further process the input image 302 to detect and extract textual content. The extracted text, together with visual features derived from the input image 302, may then be supplied as input to the second ML model 208B.

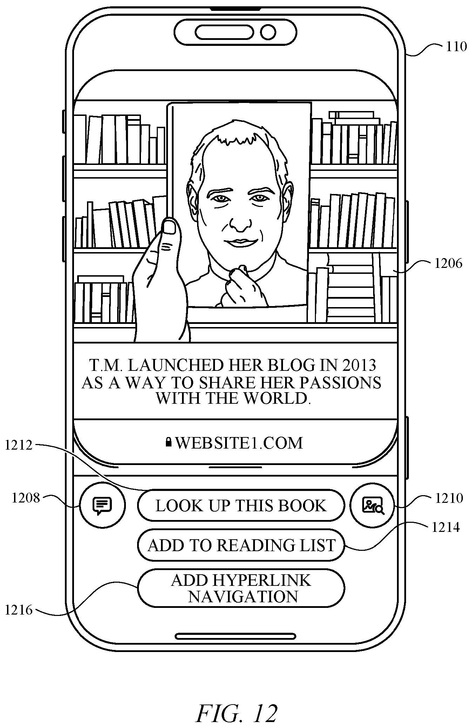

Execution of the first ML model 208A may trigger creation of a set of actions, either predefined or dynamically generated. These actions may be associated with the input image 302 and displayed through a user interface of the electronic device 110. Example actions may include initiating searches (e.g., "look up this book"), hyperlink navigation, addition of content to reading lists (e.g., "add to reading list"), or invoking third-party image search providers 1130. Action generation may occur automatically based on visual and textual content identified within the image, allowing contextual interaction with the content. In particular, the first ML model 208A may output structured feature data that represents detected visual entities, recognized text segments, and contextual relationships between the detected elements. The feature data may be passed through a classification layer of the first ML model 208A configured to associate certain detected entities with predefined action categories. For example, detection of a text region classified as a book title may be mapped to a "look up" or "add to reading list" action, while detection of an object classified as a product may be mapped to a "visual search" or "purchase" action. Additional filtering or ranking may be applied to facilitate that the most contextually relevant actions are retained, based on a relevance score computed from at least one of visual similarity, text confidence levels, or historical action-selection statistics. For example, referring to FIG. 12, content 1206 is provided for display on the electronic device 110, and a set of actions (e.g., summarization action 1208, visual search action 1210, "look up" action 1212, "add to" action 1214, and add hyperlink navigation action 1216) are displayed through a user interface of the electronic device 110. Each generated action may correspond to a specific intent executable by the electronic device 110 or routed to a third-party image search provider 1130. Actions may include, but are not limited to, visual search, summarization, and data extraction. Generated actions may be ranked and presented to the user as selectable elements within an interactive user interface, with user selection initiating a prompt action 1154 that may drive further processing by the second ML model 208B or third-party image search providers 1130.

The visual bundle 1120 generated by the first ML model 208A may include data from a grounding model 1121, a visual lookup component 1122, and a schema 1124. The schema 1124 may include structured metadata, such as embeddings, for ranking available actions. The grounding model 1121 may output object- or entity-specific data (e.g., product identifiers, content categories), which may be used in downstream processing by components such as a prompt actions engine 1150, a save-for-later module 1140, or third-party image search providers 1130. Action types may include application intents 1126, built-in functions 1128, and other system-level operations. Certain application intents may be mapped to existing application intents to maintain compatibility with installed applications. For example, an application intent 1126 (e.g., "add to reminders") may invoke a native reminder function or structured data ingestion by a third-party application.

In one or more implementations, a semantic mapping module 1148 may associate grounding labels derived from the visual lookup component 1122 with higher-level categories within content categories 1136, which can subsequently align with a ranking data structure 1138. In one or more implementations, a hierarchical mapping process may be utilized to determine content and/or application categories 1136 relevant to a visual input. The process may begin with a grounding label, which is mapped to a content category, and then to one or more application categories 1136. The grounding label may be generated by the visual lookup component 1122 through analysis of object detection outputs, text recognition results, and associated feature embeddings extracted from the input image 302. In particular, detected objects and recognized text segments may be classified into semantic classes using the first ML model 208A, and the resulting class identifiers may form the grounding labels. For example, if the visual lookup component 1122 identifies a rectangular object with text corresponding to an ISBN or title, the generated grounding label may be "book." A return value can be associated with each mapping to indicate an internal confidence level in the assignment. Higher confidence values may correspond to increased ranking weight, while lower confidence values may correspond to categories with weaker correlation or inconsistent classification within the schema 1124. For example, a grounding label such as "book" may map with high confidence directly to an application category 1136 labeled "books," whereas other grounding labels may map to multiple categories with reduced confidence. Confidence weighting may therefore be incorporated into the genre relevance metric 1133 of the ranking data structure 1138. This hierarchical mapping process may beneficially prevent mismatched suggestions, such as the recommendation of an unrelated content category 1136 when the input image 302 represents a consumer product.

The ranking data structure 1138 may encode hierarchical relationships among grounding labels, content categories, and application categories, with lower levels adaptively refined from behavioral data stored in the vector database 1114. Certain portions of the ranking data structure 1138 can be preconfigured, while other portions may be dynamically determined based on applications available on the electronic device 110. Lower-tier levels of the ranking data structure 1138 may be adaptively derived from historical user behavior stored in the vector database 1114, including frequency of use, recency of interaction, and selection rate patterns. The ranking data structure 1138 may be generated by clustering grounding labels and associated user actions into hierarchical nodes, with relationships between nodes encoded as weighted connections reflecting contextual relevance and engagement probability. The weights may be adjusted over time based on behavioral data stored in the vector database 1114, allowing the ranking data structure 1138 to evolve with user interaction patterns. Items exhibiting higher relevance scores or shorter embedding distances to a given grounding label may consequently be ranked above others. Ranking of actions may be based on an action richness metric 1132, a genre relevance metric 1133, an engagement metric 1134, and an embedding distance metric 1135. Embedding distance metrics may enable intra-class differentiation for items sharing a grounding label but differing semantically.

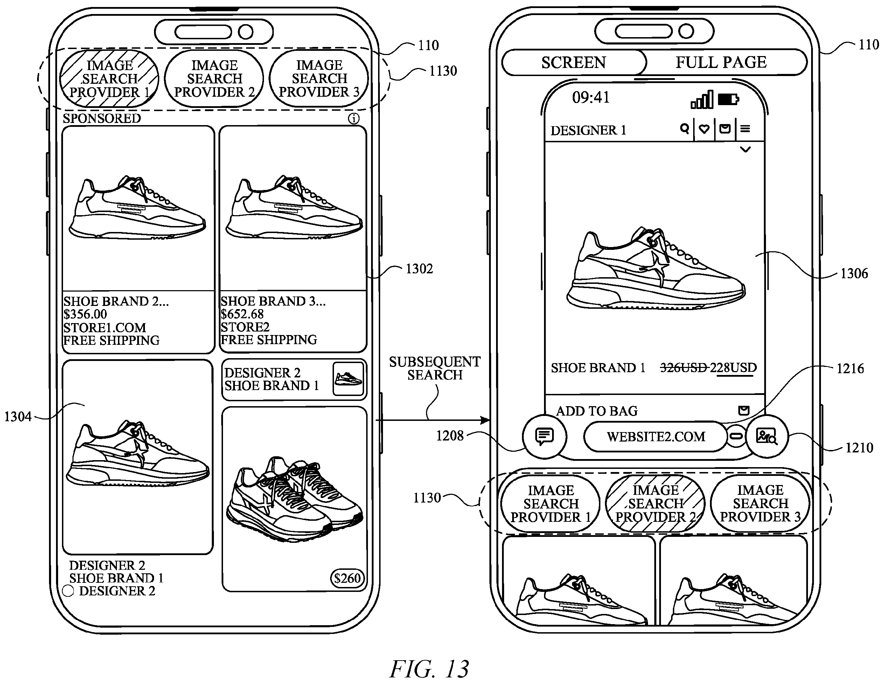

User-specific behavior patterns may influence prioritization of actions. Data such as frequency of selection, recency of interaction, and engagement rate with previous actions may be captured and stored in a vector database 1114. This behavioral data may be applied by the first ML model 208A to rank contextually relevant actions and determine which image search provider 1130 is invoked. Provider selection may be informed by historical usage, with engagement frequency and content-specific associations determining prioritization across image search providers. For example, repeated use of a first provider for footwear-related content may bias subsequent footwear searches toward that provider, while a second provider may be prioritized for furniture-related content. For example, referring to FIG. 13, a user interface of the electronic device 110 includes a search result 1302 provided through a first provider among the third-party image search providers 1130. The search result 1302 may include an image 1304 containing footwear-related content associated with a second provider among the third-party image search providers 1130 such that a subsequent search for footwear-related content is biased toward the second provider. In the subsequent footwear search associated with the second provider, the interactive user interface of the electronic device 110 displays an image 1306 containing footwear-related content related to the image 1304. The interactive user interface of the subsequent search may display a set of actions (e.g., summarization action 1208, visual search action 1210, and add hyperlink navigation action 1216) to initiate an action that may drive further processing by the second ML model 208B or third-party image search providers 1130.

Behavioral distributions may be represented in the vector database 1114 through histogram-based or embedding-based structures, which can support embedding distance metrics (e.g., embedding distance metric 1135), genre relevance scoring (e.g., genre relevance metric 1133), engagement (e.g., engagement metric 1134), and action richness metrics (e.g., action richness metric 1132) to guide ranking decisions. Each metric may generate a normalized score computed from weighted feature vectors, where individual features correspond to user interaction frequency, semantic similarity, and contextual relevance derived from prior embeddings. The composite ranking score may be obtained through a weighted summation of these normalized values, producing an overall ranking index used to order actions. Higher-ranked actions may provide outcomes that are more specific or contextually beneficial, such as "Add to Calendar," compared to more generic outcomes, such as "Summarize." Application of the action richness metric 1132 may assign greater relative weight to actions that provide more specific or beneficial outcomes.

In addition to label-based categorization, the system process 205 may operate within an embedding space maintained by the vector database 1114. In this embedding space, semantic proximity between object features is computed, allowing differentiation between input images 302 that share an identical grounding label but represent different semantic contexts. For example, a grounding label of "bottle" may correspond to a bottle of ketchup or a bottle of whiskey. Embedding space similarity measures, in combination with historical user behavioral data stored in the vector database 1114, may determine whether a third-party image search provider 1130 for alcohol-related content is prioritized for whiskey-related searches, while a separate provider is recommended for food-related searches.

In one or more implementations, a grounding label such as "bottle" may be assigned to distinct objects including a ketchup bottle and a wine bottle. In a ranking scenario where historical user behavior is evenly distributed between selecting a first application associated with wine-related content and a second application associated with general retail content, the embedding space stored in the vector database 1114 can be analyzed to determine whether the object embedding is closer to a cluster associated with wine-related content categories 1136 or closer to a cluster associated with general retail content categories 1136. The object may then be ranked accordingly within the ranking data structure 1138. This approach can provide differentiation in cases where grounding labels lack sufficient granularity, enabling more precise categorization without requiring a large-scale expansion of the schema 1124. The methodology may also support incremental expansion of the schema 1124 by identifying areas where finer classification may be beneficial, such as subdividing food-related products into item-specific distinctions.

Differentiation between items within identical grounding labels may be achieved through embedding distance metrics. For example, the label "bottle" may correspond to distinct subtypes such as shampoo, whiskey, or ketchup bottles. Embedding similarity, combined with historical user interaction data, may determine which provider or content category is prioritized. Embedding distance metrics can operate as intra-class tiebreaking mechanisms when multiple items share an identical grounding label but differ in semantic or contextual meaning. For example, a shampoo bottle, a whiskey bottle, and a ketchup bottle may all be assigned an identical grounding label such as "packaged product." Although these objects fall within the same high-level category, their visual features and usage contexts differ. The embedding space can be evaluated to determine semantic proximity among these objects, enabling the first ML model 208A to differentiate them by referencing historical interaction behavior stored in the vector database 1114. The measurement process can include identifying proximate entries within the embedding space and evaluating cosine similarity distance. When the similarity value falls within a predefined threshold, the proximity relationship may be incorporated as a tiebreaking input within the ranking data structure 1138 executed by the first ML model 208A.

This differentiation process may also extend to other categories where multiple visually distinct objects share the same grounding label. For instance, within a packaged product category, a cereal box may be distinguished from other packaged items by comparing their embedding representations and evaluating historical engagement using the engagement metric 1134. When user behavior consistently associates a sub-type of object with a specific application, the application whose embedding is closest to the queried object may be prioritized within the ranking data structure 1138.

The prompt actions engine 1150 may generate default or user-specific prompts based on grounding labels, embeddings, or historical queries. Prompts may be displayed through a selectable prompt actions interface 1152 and may include multiple queries inferred from content type. For example, an input image of a building may generate prompts such as "identify architect," "determine construction year," or "classify architectural style." Integration with the prompt actions engine 1150 may enable automatic generation of configurable default or user-specific prompts. These prompts can combine grounding labels, embeddings, and semantic mapping outputs to provide a ranked set of contextually relevant actions. In one or more implementations, the prompt actions engine 1150 may preserve user-specific queries for reuse. For example, if a user repeatedly queries "How old is this building?" in connection with images of architectural structures, the prompt actions engine 1150 may store this query and automatically apply it in future instances of similar images. In one or more implementations, the prompt actions engine 1150 may infer new prompts from historical interaction data, generating context-aware prompts without explicit user input. Stored prompts may support persistent personalization and context-aware interaction.

When producing ranked action suggestions, the system process 205 can present multiple potential actions or third-party image search providers 1130. One presentation mode may involve a horizontally scrollable interface, using the selectable prompt actions interface 1152, where ranked actions are promoted based on ranking signals. In one or more implementations, the ranking signals may include major and/or minor grounding labels, action richness, frequency, recency, frequency (global), recency (global), engagement including negative feedback, embedding distance, application popularity, among others. Another presentation mode may be accessed through an image search function, in which available third-party image search providers 1130 are presented in ranked order according to historical usage frequency, recency of interaction, content type, embedding-based similarity stored in the vector database 1114, and genre relevance. For example, when a third-party image search provider 1130 has been consistently selected for searches involving clothing objects, that provider may be ranked higher than providers without prior usage for similar content. The ranking process can facilitate presentation of the most contextually relevant action for the identified content type, enabling follow-on actions including purchase, bookmarking, or structured output 310 generation for downstream applications.

In one or more implementations, a semantic mapping module 1148 may be incorporated to expand semantic interpretation capabilities as the number of available action instances increases. Rather than relying exclusively on behavioral analysis or traversal of the ranking data structure 1138, direct semantic interpretation of scene content may be performed. This process may involve embedding-space similarity computations within the vector database 1114 to associate object-level features of an input image 302 with the most relevant application intents 1126 or built-in functions 1128. For example, an image of a milk container can be mapped directly to an application intent 1126 corresponding to "add to grocery list," whereas an image of a wine bottle can be semantically linked to applications associated with beverage providers independent of intermediate schema 1124 traversal. Such semantic mapping may be achieved by extracting object-level features and computing vector similarity against stored embeddings of application intents 1126.

The structured output 310 may be transferred in a computer vision pixel buffer format 1146 to downstream modules for efficient image data handling, stored within the vector database 1114, or routed to the target applications 1142. In one or more implementations, transmission of an input image 302 to third-party image search providers 1130 may be performed using optimized data transport mechanisms. The transmission process may involve both ranking logic and low-level handling of image transport to facilitate efficient delivery of image data. In some implementations, the transmission may be optimized for the operating characteristics of a mobile telephony platform, which can provide beneficial mitigation of memory degradation during data transfer and reduce lossy transformations that may otherwise degrade downstream processing accuracy. In one or more other implementations, the input image 302 may be maintained in an uncompressed and memory-efficient format, such as the computer vision pixel buffer format 1146, during transmission. This can mitigate the imposition of predetermined compression or encoding schemes, such as JPEG or TIFF, on receiving applications. By avoiding constraint to a specific format, the system process 205 may allow recipient systems to perform conversions into preferred formats using their local processing pipeline, preserving image fidelity for provider-side processing.

Return data from a third-party image search provider 1130 may likewise be retrieved using performance-optimized transfer methods to reduce end-to-end latency. In one implementation, the system process 205 may utilize the computer vision pixel buffer format 1146 to structure transmitted or returned data. Structured data formatted in this manner may be integrated into an application-level intent-handling framework, which can include compatibility with the image capture pipeline, intent invocation layers, and provider-specific ingestion endpoints.

A visual search intent directed to a third-party image search provider 1130 may involve transmitting both the computer vision pixel buffer format 1146 data and contextual metadata. The contextual metadata can include grounding labels or textual representations generated by the first ML model 208A or the second ML model 208B. In one or more implementations, the transmitted data may be limited to the grounding label and the corresponding input image 302. In one or more other implementations, the transmitted data may include structured and semantically rich information. Providing additional structured information may enable the third-party image search provider 1130 to return results with greater contextual completeness and improved relevance.

A save-for-later module 1140 may capture identified objects for subsequent use in the target applications 1142 such as reminders, shopping lists, or collection management. In one or more implementations, integration of visual search into the save-for-later module 1140 may provide beneficial automation and increased contextual relevance for stored content, particularly in applications that utilize structured product or item data. In one or more implementations, the content may be saved in different formats, including precise text representations, structured output 310, or captured visual data such as screenshots. The save-for-later module 1140 may determine which representation to save based on contextual factors, application requirements, or user preferences. In one or more implementations, the saved content may be routed to the target applications 1142, such as list-making applications, reminders, or collection management systems. For example, a screenshot may include a recipe, a prepared food dish, or a packaged product, which may then be associated with a designated application through an "add to" action. The "add to" action may direct the captured content into one or more target applications 1142, including a shopping list, reading list, or reminders application. In one or more implementations, integration with visual search functionality may allow structured entities stored in the save-for-later module 1140 to support downstream actions, such as purchase, categorization, or retrieval across multiple application contexts.

In one or more implementations, overly generic labels may be excluded, with inference applied by the second ML model 208B to refine grounding outputs into contextually precise text strings. The text encoder 716 may generate textual representations for storage, and structured entity data retrieved from providers 1130 may support downstream tasks such as automated shopping list creation or purchase initiation. Stored content may include text, structured outputs, or visual data such as screenshots, routed as appropriate to target applications 1142.

In one or more implementations, functionality may be provided by the save-for-later module 1140 to capture identified objects for later use, such as adding entries to a reminders list, a shopping list, or other note-taking systems. For example, if the grounding process generates the generic label "fruit" for an object corresponding to a banana, saving the term "fruit" to a grocery list may provide less utility compared to saving the term "banana." In this case, the first ML model 208A may combine grounding outputs with inference from the second machine learning model 208B to generate a more precise and contextually relevant string representation.

When returned grounding labels are overly broad, the save-for-later module 1140 can exclude them. For example, in the case where a grounding label of "nutrition" is returned for a banana, the label "nutrition" may be excluded from a grocery list, as it is too generic to be useful for a shopping context. Similarly, if the grounding process produces the label "torso" for an image of a human subject, the resulting term may not provide meaningful context for note-taking or list-keeping systems. In one or more implementations, the action richness metric 1132 may influence a determination of whether or not to save a grounding label in the save-for-later module 1140. For example, if the grounding label is highly generic, the action richness metric 1132 may assign a lower ranking to the action of saving it, resulting in the exclusion of that label.

In one or more implementations, when the intended save target corresponds to an application requiring a structured entity rather than a text string, the save-for-later module 1140 can populate the structured output 310. For example, when storing a book into a reading list, the system process 205 may initiate a search query through third-party image search providers 1130 or other data sources. The returned results may provide structured search entries corresponding to the captured object. The structured output 310 may then be linked to the native functions of a target application 1142. Once linked, the structured output 310 can support downstream actions, including initiating a purchase, adding the entity to a shopping list, or associating the entity with a user-specific collection.

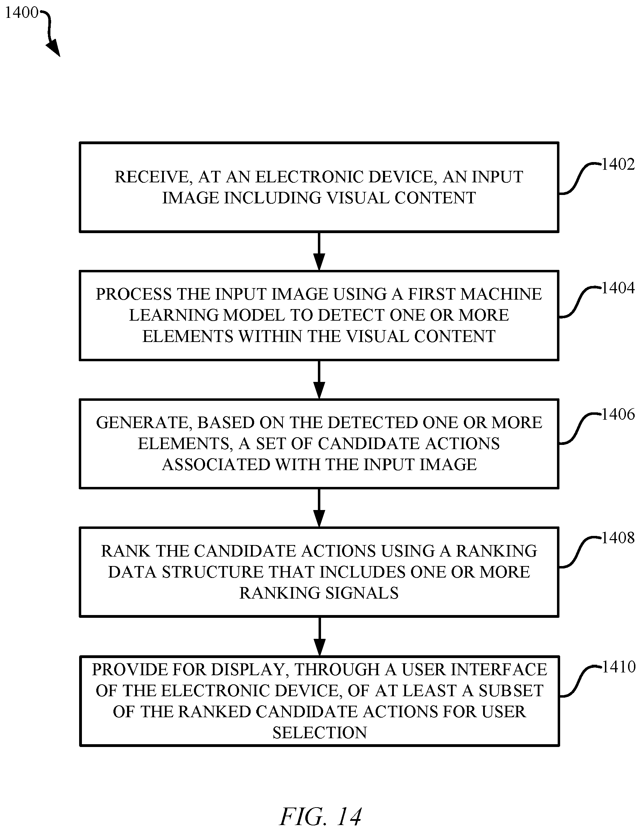

FIG. 14 illustrates a flowchart of an example process 1400 for detecting an element in an image and mapping an action to the detected element. For explanatory purposes, the process 1400 is primarily described herein with reference to the electronic device 110 and server 120 of FIG. 1. However, the process 1400 is not limited to the electronic device 110 and the server 120 of FIG. 1, and one or more blocks (or operations) of the process 1400 may be performed by one or more other suitable devices. Further for explanatory purposes, the blocks of the process 1400 are described herein as occurring in serial, or linearly. However, multiple blocks of the process 1400 may occur in parallel. In addition, the blocks of the process 1400 need not be performed in the order shown and/or one or more blocks of the process 1400 need not be performed and/or can be replaced by other operations.

At block 1402, the system process 205 (FIG. 2) can receive, at an electronic device (e.g., the electronic device 110 of FIG. 1), an input image (e.g., input image 302 of FIG. 11) including visual content. At block 1404, the system process 205 can process the input image 302 using a first machine learning model (e.g., first ML model 208A of FIG. 11) to detect one or more elements within the visual content. In one or more implementations, the first ML model 208A includes an object detector configured to identify textual portions, objects, or both within the input image 302. In one or more other implementations, the system process 205 can refine grounding outputs using a second machine learning model (e.g., second ML model 208B of FIG. 11) to generate contextually precise textual representations for downstream applications.

At block 1406, the system process 205 can generate, based on the detected one or more elements, a set of candidate actions associated with the input image. In one or more implementations, the set of candidate actions may include at least one of a visual search action, a summarization action, an "add to" action, or a hyperlink navigation action. In one or more other implementations, the set of candidate actions can be generated using a prompt actions engine (e.g., prompt actions engine 1150 of FIG. 11) configured to infer new prompts from historical user queries. In one or more implementations, at least one of the ranked candidate actions may include storing an identified object into a save-for-later module (e.g., save-for-later module 1140 of FIG. 11) associated with at least one of the candidate actions.

At block 1408, the system process 205 can rank the candidate actions using a ranking data structure (e.g., ranking data structure 1138 of FIG. 11) that includes one or more ranking signals. In one or more implementations, the one or more ranking signals includes an action richness metric (e.g., action richness metric 1132 of FIG. 11), a grounding label relevance metric (e.g., genre relevance metric 1133 of FIG. 11), an engagement metric (e.g., engagement metric 1134 of FIG. 11), or an embedding similarity metric (e.g., embedding distance metric 1135 of FIG. 11). In one or more other implementations, the ranking data structure 1138 can incorporate historical user interaction data stored in a vector database (e.g., vector database 1114 of FIG. 11), the historical user interaction data including frequency of selection, recency of interaction, or engagement rate. In one or more implementations, ranking of the candidate actions may include applying the embedding distance metric 1135 to differentiate between objects having identical grounding labels with distinct semantic contexts. In one or more other implementations, the system process 205 can exclude grounding labels determined to be overly generic based at least in part on the one or more ranking signals.

At block 1410, the system process 205 can provide for display, through a user interface of the electronic device 110, of at least a subset of the ranked candidate actions for user selection. In one or more implementations, the display of the ranked candidate actions may include presentation through a horizontally scrollable prompt actions interface. In one or more other implementations, the system process 205 can route stored content that includes a structured output (e.g., structured output 310 of FIG. 11) to one or more target applications (e.g., target applications 1142 of FIG. 11) associated with the electronic device 110.

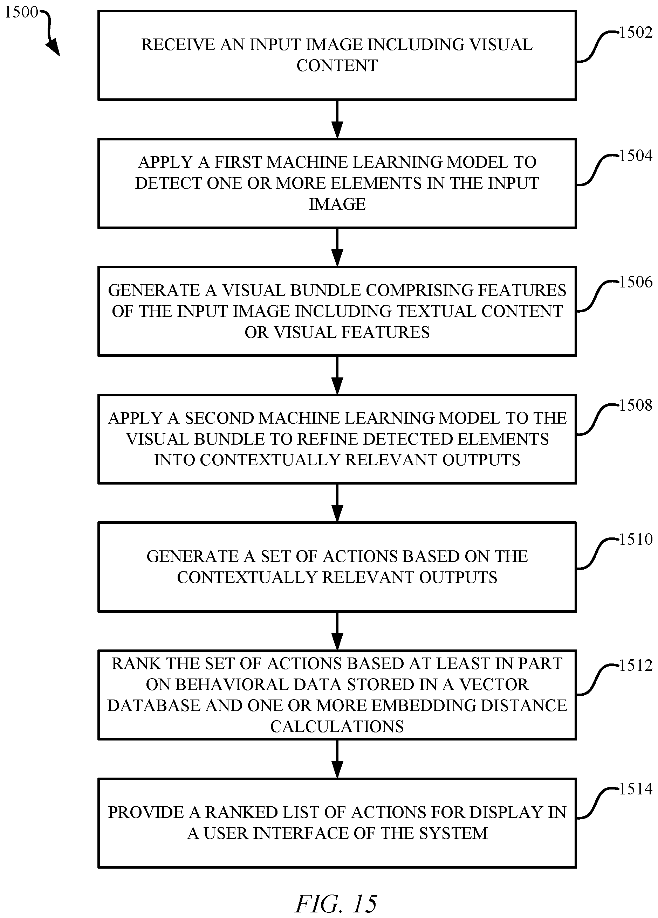

FIG. 15 illustrates a flowchart of an example process 1500 for detecting an element in an image and mapping an action to the detected element. For explanatory purposes, the process 1500 is primarily described herein with reference to the electronic device 110 and server 120 of FIG. 1. However, the process 1500 is not limited to the electronic device 110 and the server 120 of FIG. 1, and one or more blocks (or operations) of the process 1500 may be performed by one or more other suitable devices. Further for explanatory purposes, the blocks of the process 1500 are described herein as occurring in serial, or linearly. However, multiple blocks of the process 1500 may occur in parallel. In addition, the blocks of the process 1500 need not be performed in the order shown and/or one or more blocks of the process 1500 need not be performed and/or can be replaced by other operations.

At block 1502, the system process 205 (FIG. 2) can receive an input image (e.g., input image 302 of FIG. 11) including visual content. At block 1504, the system process 205 can apply a first machine learning model (e.g., first ML model 208A of FIG. 11) to detect one or more elements in the input image 302.

At block 1506, the system process 205 can generate a visual bundle (e.g., visual bundle 1120 of FIG. 11) that includes features of the input image 302 including textual content or visual features. In one or more implementations, the visual bundle 1120 can include embeddings generated by a grounding model (e.g., grounding model 1121 of FIG. 11), a visual lookup component (e.g., visual lookup component 1122 of FIG. 11), or both. In one or more implementations, the system process 205 can store a semantic mapping module (e.g., semantic mapping module 1148) in memory (e.g., memory 204 of FIG. 2) and execute the semantic mapping module 1148 to map grounding labels to one or more content categories or application categories using hierarchical mapping with confidence weighting.

At block 1508, the system process 205 can apply a second machine learning model (e.g., second ML model 208B of FIG. 11) to the visual bundle 1120 to refine detected elements into contextually relevant outputs. A contextually relevant output may correspond to refined visual or textual data aligned with semantic meaning and intended use within the surrounding content. The output may include normalized entity labels or text strings suitable for downstream action generation and ranking. In one or more implementations, the second ML model 208B can refine grounding outputs into contextually precise text strings for downstream processing.

At block 1510, the system process 205 can generate a set of actions based on the contextually relevant outputs. At block 1512, the system process 205 can rank the set of actions based at least in part on behavioral data stored in a vector database (e.g., vector database 1114 of FIG. 11) and one or more embedding distance metrics (e.g., embedding distance metric 1135 of FIG. 11). In one or more implementations, the ranking of the set of actions may be further based on an action richness metric (e.g., action richness metric 1132 of FIG. 11) that assigns greater relative weight to actions providing specific or contextually beneficial outcomes.

At block 1514, the system process 205 can provide a ranked list of actions for display in a user interface of the system (e.g., electronic device 110). In one or more implementations, the ranked list of actions may include application intents (e.g., application intents 1126) mapped to native functions of installed applications on the electronic device 110. In one or more other implementations, the user interface may be configured to display the ranked actions in an interactive list and receive user input selecting one of the actions for execution. In one or more implementations, execution of one of the actions may include the system process 205 sending the input image 302 and contextual metadata to a third-party image search provider (e.g., third-party image search provider 1130 of FIG. 11).

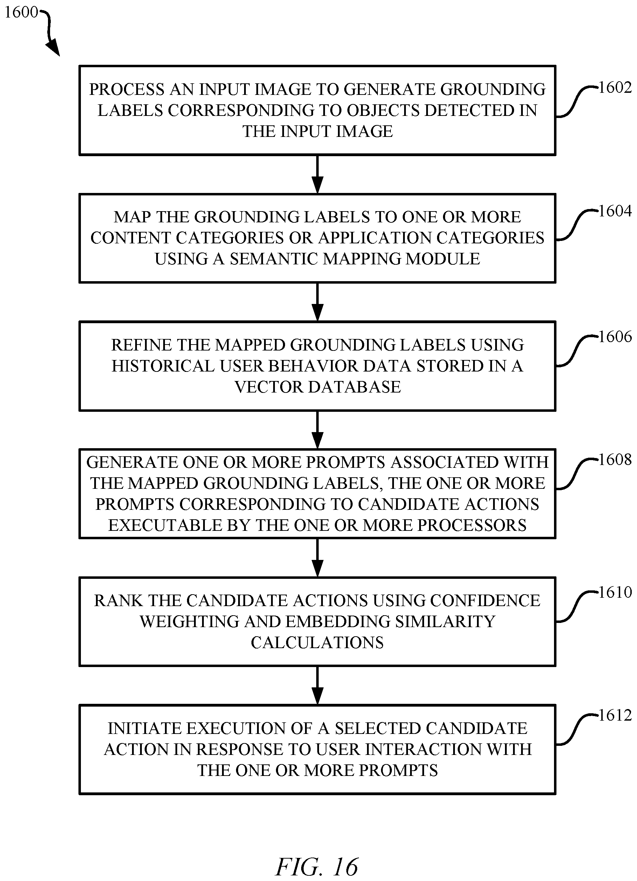

FIG. 16 illustrates a flowchart of an example process 1600 for detecting an element in an image and mapping an action to the detected element. For explanatory purposes, the process 1600 is primarily described herein with reference to the electronic device 110 and server 120 of FIG. 1. However, the process 1600 is not limited to the electronic device 110 and the server 120 of FIG. 1, and one or more blocks (or operations) of the process 1600 may be performed by one or more other suitable devices. Further for explanatory purposes, the blocks of the process 1600 are described herein as occurring in serial, or linearly. However, multiple blocks of the process 1600 may occur in parallel. In addition, the blocks of the process 1600 need not be performed in the order shown and/or one or more blocks of the process 1600 need not be performed and/or can be replaced by other operations.

At block 1602, the system process 205 can process an input image (e.g., input image 302 of FIG. 11) to generate grounding labels corresponding to objects detected in the input image 302. At block 1604, the system process 205 can map the grounding labels to one or more content categories or application categories (e.g., content and application categories 1136 of FIG. 11) using a semantic mapping module (e.g., semantic mapping module 1148 of FIG. 11). In one or more implementations, the mapping of the grounding labels to the one or more content categories or application categories may include hierarchical mapping from a grounding label to a content category and subsequently to an application category, with confidence weighting applied at each mapping level. At block 1606, the system process 205 can refine the mapped grounding labels using historical user behavior data stored in a vector database (e.g., vector database 1114 of FIG. 11).

At block 1608, the system process 205 can generate one or more prompts associated with the mapped grounding labels, in which the one or more prompts may correspond to candidate actions executable by the system process 205. In one or more other implementations, the candidate actions can be executable by one or more third-party image search providers (e.g., third-party image search provider 1130 of FIG. 11). In one or more implementations, the one or more prompts can include default prompts, user-specific prompts, or inferred prompts based on embeddings and semantic interpretation of the input image 302. At block 1610, the system process 205 can rank the candidate actions using confidence weighting and embedding similarity calculations (e.g., embedding distance metric 1135 of FIG. 11).

At block 1612, the system process 205 can initiate execution of a selected candidate action in response to user interaction with the one or more prompts. In one or more implementations, the execution of the selected candidate action may include sending the input image 302 and contextual metadata to a third-party image search provider (e.g., third-party image search provider 1130 of FIG. 11). In one or more other implementations, the execution of the selected candidate action may include storing an identified object into a save-for-later module (e.g., save-for-later module 1140) associated with a target application (e.g., target application 1142 of FIG. 11) on the electronic device 110.

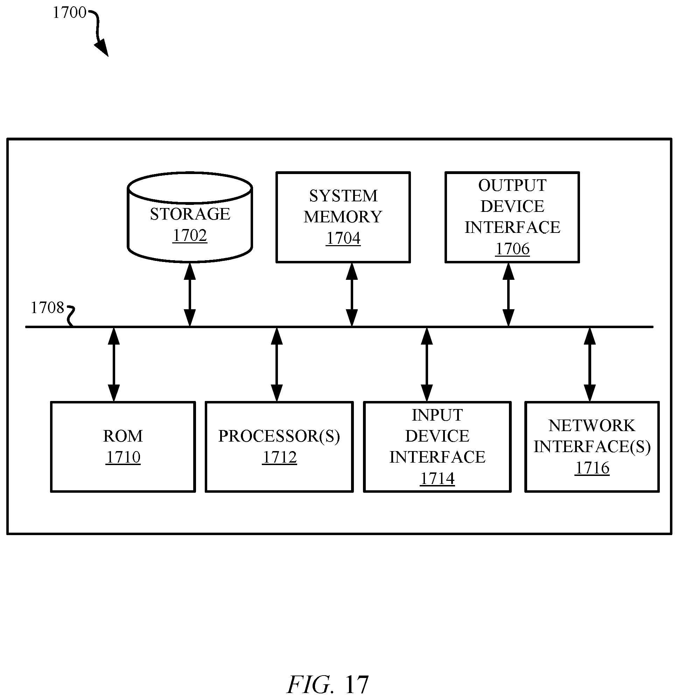

FIG. 17 illustrates an electronic system 1700 with which one or more implementations of the subject technology may be implemented. The electronic system 1700 can be, and/or can be a part of, server 120 and/or electronic device 110 shown in FIG. 1. The electronic system 1700 may include various types of computer readable media and interfaces for various other types of computer readable media. The electronic system 1700 includes a bus 1708, one or more processing unit(s) 1712, a system memory 1704 (and/or buffer), a ROM 1710, a permanent storage device 1702, an input device interface 1714, an output device interface 1706, and one or more network interfaces 1716, or subsets and variations thereof.

The bus 1708 collectively represents all system, peripheral, and chipset buses that communicatively connect the numerous internal devices of the electronic system 1700. In one or more implementations, the bus 1708 communicatively connects the one or more processing unit(s) 1712 with the ROM 1710, the system memory 1704, and the permanent storage device 1702. From these various memory units, the one or more processing unit(s) 1712 retrieves instructions to execute and data to process in order to execute the processes of the subject disclosure. The one or more processing unit(s) 1712 can be a single processor or a multi-core processor in different implementations.

The ROM 1710 stores static data and instructions that are needed by the one or more processing unit(s) 1712 and other modules of the electronic system 1700. The permanent storage device 1702, on the other hand, may be a read-and-write memory device. The permanent storage device 1702 may be a non-volatile memory unit that stores instructions and data even when the electronic system 1700 is off. In one or more implementations, a mass-storage device (such as a magnetic or optical disk and its corresponding disk drive) may be used as the permanent storage device 1702.

In one or more implementations, a removable storage device (such as a floppy disk, flash drive, and its corresponding disk drive) may be used as the permanent storage device 1702. Like the permanent storage device 1702, the system memory 1704 may be a read-and-write memory device. However, unlike the permanent storage device 1702, the system memory 1704 may be a volatile read-and-write memory, such as random-access memory. The system memory 1704 may store any of the instructions and data that one or more processing unit(s) 1712 may need at runtime. In one or more implementations, the processes of the subject disclosure are stored in the system memory 1704, the permanent storage device 1702, and/or the ROM 1710. From these various memory units, the one or more processing unit(s) 1712 retrieves instructions to execute and data to process in order to execute the processes of one or more implementations.

The bus 1708 also connects to the input and output device interfaces 1714 and 1706. The input device interface 1714 enables a user to communicate information and select commands to the electronic system 1700. Input devices that may be used with the input device interface 1714 may include, for example, alphanumeric keyboards and pointing devices (also called "cursor control devices"). The output device interface 1706 may enable, for example, the display of images generated by electronic system 1700. Output devices that may be used with the output device interface 1706 may include, for example, printers and display devices, such as a liquid crystal display (LCD), a light emitting diode (LED) display, an organic light emitting diode (OLED) display, a flexible display, a flat panel display, a solid-state display, a projector, or any other device for outputting information. One or more implementations may include devices that function as both input and output devices, such as a touchscreen. In these implementations, feedback provided to the user can be any form of sensory feedback, such as visual feedback, auditory feedback, or tactile feedback; and input from the user can be received in any form, including acoustic, speech, or tactile input.

Finally, as shown in FIG. 17, the bus 1708 also couples the electronic system 1700 to one or more networks and/or to one or more network nodes, such as the electronic device 110 or the server 120 shown in FIG. 1, through the one or more network interface(s) 1716. In this manner, the electronic system 1700 can be a part of a network of computers (such as a LAN, a wide area network ("WAN"), or an Intranet, or a network of networks, such as the Internet. Any or all components of the electronic system 1700 can be used in conjunction with the subject disclosure.

Implementations within the scope of the present disclosure can be partially or entirely realized as computer program products comprising code in a tangible computer-readable storage medium (or multiple tangible computer-readable storage media of one or more types) encoding one or more instructions of the code. The tangible computer-readable storage medium also can be non-transitory in nature.

The computer-readable storage medium can be any storage medium that can be read, written, or otherwise accessed by a general purpose or special purpose computing device, including any processing electronics and/or processing circuitry capable of executing instructions. For example, without limitation, the computer-readable medium can include any volatile semiconductor memory, such as RAM, DRAM, SRAM, T-RAM, Z-RAM, and TTRAM. The computer-readable medium also can include any non-volatile semiconductor memory, such as ROM, PROM, EPROM, EEPROM, NVRAM, flash, nvSRAM, FeRAM, FeTRAM, MRAM, PRAM, CBRAM, SONOS, RRAM, NRAM, racetrack memory, FJG, and Millipede memory.

Further, the computer-readable storage medium can include any non-semiconductor memory, such as optical disk storage, magnetic disk storage, magnetic tape, other magnetic storage devices, or any other medium capable of storing one or more instructions. In one or more implementations, the tangible computer-readable storage medium can be directly coupled to a computing device, while in other implementations, the tangible computer-readable storage medium can be indirectly coupled to a computing device, e.g., via one or more wired connections, one or more wireless connections, or any combination thereof.

Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. As recognized by those of skill in the art, details including, but not limited to, the number, structure, sequence, and organization of instructions can vary significantly without varying the underlying logic, function, processing, and output.

While the above discussion primarily refers to microprocessor or multi-core processors that execute software, one or more implementations are performed by one or more integrated circuits, such as ASICs or FPGAs. In one or more implementations, such integrated circuits execute instructions that are stored on the circuit itself.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application. Various components and blocks may be arranged differently (e.g., arranged in a different order, or segmented in a different way) all without departing from the scope of the subject technology.

Aspects of the present technology may include the gathering and use of data available from specific and legitimate sources to train machine learning models and to apply to trained machine learning models deployed in systems. The present disclosure contemplates that in some instances, this gathered data may include personal information data that uniquely identifies or can be used to identify a specific person. Such personal information data can include meta-data or other data associated with images that may include demographic data, location-based data, online identifiers, telephone numbers, email addresses, home addresses, data or records relating to a user's health or level of fitness (e.g., vital signs measurements, medication information, exercise information), date of birth, or any other personal information.

The present disclosure recognizes that the use of such personal information data, in the present technology, can be used to the benefit of users. For example, the personal information data can be used to train a machine learning model for better performance. Accordingly, use of such personal information data enables users to have greater control of the delivered content. Further, other uses for personal information data that benefit the user are also contemplated by the present disclosure.

The present disclosure contemplates that those entities responsible for the collection, analysis, disclosure, transfer, storage, or other use of such personal information data will comply with well-established privacy policies and/or privacy practices. In particular, such entities would be expected to implement and consistently apply privacy practices that are recognized as meeting or exceeding industry or governmental requirements for maintaining the privacy of users. Such information regarding the use of personal data should be prominently and easily accessible by users and should be updated as the collection and/or use of data changes. Personal information from users should be collected for legitimate uses only. Further, such collection/sharing should occur only after receiving the consent of the users or other legitimate basis specified in applicable law. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations which may serve to impose a higher standard. For instance, in the US, collection of or access to certain health data may be governed by federal and/or state laws, such as the Health Insurance Portability and Accountability Act (HIPAA); whereas health data in other countries may be subject to other regulations and policies and should be handled accordingly.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of training data collection, the present technology can be configured to allow users to select to "opt in" or "opt out" of participation in the collection of personal information data during registration for services or anytime thereafter. In another example, users can select not to provide mood-associated data for use as training data. In yet another example, users can select to limit the length of time mood-associated data is maintained or entirely block the development of a baseline mood profile. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing identifiers, controlling the amount or specificity of data stored (e.g., collecting location data at city level rather than at an address level), controlling how data is stored (e.g., aggregating data across users), and/or other methods such as differential privacy.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, training data can be selected based on aggregated non-personal information data or a bare minimum amount of personal information, such as the content being handled only on the user's device or other non-personal information available to as training data.

It is understood that any specific order or hierarchy of blocks in the processes disclosed is an illustration of example approaches. Based upon design preferences, it is understood that the specific order or hierarchy of blocks in the processes may be rearranged, or that all illustrated blocks be performed. Any of the blocks may be performed simultaneously. In one or more implementations, multitasking and parallel processing may be advantageous. Moreover, the separation of various system components in the implementations described above should not be understood as requiring such separation in all implementations, and it should be understood that the described program components and systems can be integrated together in a single software product or packaged into multiple software products.

As used in this specification and any claims of this application, the terms "base station," "receiver," "computer," "server," "processor," and "memory" all refer to electronic or other technological devices. These terms exclude people or groups of people. For the purposes of the specification, the terms "display" or "displaying" means displaying on an electronic device.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

The predicate words "configured to," "operable to," and "programmed to" do not imply any particular tangible or intangible modification of a subject, but, rather, are intended to be used interchangeably. In one or more implementations, a processor configured to monitor and control an operation, or a component may also mean the processor being programmed to monitor and control the operation or the processor being operable to monitor and control the operation. Likewise, a processor configured to execute code can be construed as a processor programmed to execute code or operable to execute code.

Phrases such as an aspect, the aspect, another aspect, some aspects, one or more aspects, an implementation, the implementation, another implementation, some implementations, one or more implementations, an embodiment, the embodiment, another embodiment, some implementations, one or more implementations, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

The word "exemplary" is used herein to mean "serving as an example, instance, or illustration." Any embodiment described herein as "exemplary" or as an "example" is not necessarily to be construed as preferred or advantageous over other implementations. Furthermore, to the extent that the term "include," "have," or the like is used in the description or the claims, such term is intended to be inclusive in a manner similar to the term "comprise" as "comprise" is interpreted when employed as a transitional word in a claim.

All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. § 112(f) unless the element is expressly recited using the phrase "means for" or, in the case of a method claim, the element is recited using the phrase "step for".

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein but are to be accorded the full scope consistent with the language claims, wherein reference to an element in the singular is not intended to mean "one and only one" unless specifically so stated, but rather "one or more." Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

Exemplary methods, systems, and non-transitory computer-readable storage media are set out in the following items.
1. A computer-implemented method comprising:
   receiving, at an electronic device, an input image including visual content;
   processing the input image using a first machine learning model to detect one or more elements within the visual content, wherein the one or more elements include one or more objects in the visual content or one or more textual portions of the visual content;
   generating, based on the detected one or more elements, a set of candidate actions for processing at least a portion of the input image;
   ranking the set of candidate actions using a ranking data structure that includes one or more ranking signals; and
   providing for display, through a user interface of the electronic device, at least a subset of the ranked set of candidate actions for user selection.
2. The method of item 1, wherein the first machine learning model comprises an object detector configured to identify the one or more objects within the input image or a text recognition model configured to identify the one or more textual portions within the visual content.
3. The method of item 1, wherein the one or more ranking signals comprises an action richness metric, a grounding label relevance metric, an engagement metric, or an embedding similarity metric, and wherein the ranking data structure incorporates historical user interaction data stored in a vector database, the historical user interaction data including frequency of selection, recency of interaction, or engagement rate.
4. The method of item 1, wherein ranking of the candidate actions comprises applying an embedding distance metric to differentiate between objects having identical grounding labels with distinct semantic contexts.
5. The method of item 1, wherein the set of candidate actions comprises at least one of a visual search action, a summarization action, an "add to" action, or a hyperlink navigation action.
6. The method of item 1, further comprising:
   receiving, via the user interface, a selection of a candidate action of the set of candidate actions; and
   processing at least the portion of the input image based at least in part on the selection of the candidate action.
7. The method of item 1, wherein the set of candidate actions is generated using a prompt actions engine configured to infer new prompts from historical user queries.
8. The method of item 1, further comprising:
   refining grounding outputs using a second machine learning model to generate contextually precise textual representations for downstream applications.
9. The method of item 1, further comprising excluding grounding labels determined to be overly generic based at least in part on the one or more ranking signals.
10. The method of item 1, wherein at least one candidate action of the ranked set of candidate actions comprises storing an identified object into a save-for-later module associated with at least one of the candidate actions.
11. The method of item 1, further comprising routing stored content comprising a structured output to one or more target applications associated with the electronic device.
12. A system comprising:
   one or more processors; and
   a memory storing instructions that, when executed by the one or more processors, cause the system to:
      receive an input image including visual content;
      apply a first machine learning model to detect one or more elements in the input image, wherein the one or more elements include one or more objects in the visual content or one or more textual portions of the visual content;
      generate a visual bundle comprising features of the input image including the one or more textual portions of the visual content or the one or more objects in the visual content;
      apply a second machine learning model to the visual bundle to refine the detected one or more elements into contextually relevant outputs;
      generate a set of actions based on the contextually relevant outputs;
      rank the set of actions based at least in part on historical user interaction data; and
      provide a ranked list of actions for display in a user interface of the system.
13. The system of item 12, wherein the ranking of the set of actions is further based on an action richness metric that assigns greater relative weight to actions providing specific or contextually beneficial outcomes.
14. The system of item 12, wherein the visual bundle includes embeddings generated by a grounding model, a visual lookup component, or both.
15. The system of item 12, wherein the second machine learning model refines grounding outputs into contextually precise text strings for downstream processing.
16. The system of item 12, wherein the ranked list of actions comprises application intents mapped to native functions of installed applications on the system.
17. The system of item 12, wherein the memory further stores a semantic mapping module configured to map grounding labels to one or more content categories or application categories using hierarchical mapping with confidence weighting.
18. The system of item 12, wherein the user interface is configured to display the ranked set of actions in an interactive list and receive user input selecting one of the actions for execution.
19. The system of item 18, wherein execution of one of the actions comprises sending the input image and contextual metadata to a third-party image search provider.
20. A non-transitory computer-readable medium storing instructions that, when executed by one or more processors, cause the one or more processors to:
   process an input image to generate grounding labels corresponding to objects detected in the input image;
   map the grounding labels to one or more content categories or application categories based at least in part on a semantic mapping;
   refine the mapped grounding labels using historical user interaction data;
   generate one or more prompts associated with the mapped grounding labels, the one or more prompts corresponding to candidate actions executable by the one or more processors;
   rank the candidate actions using confidence weighting and embedding distance metrics; and
   initiate execution of a selected candidate action in response to user selection of a displayed action item associated with the candidate actions.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A computer-implemented method comprising:
receiving, at an electronic device, an input image including visual content;
processing the input image using a first machine learning model to detect one or more elements within the visual content, wherein the one or more elements include one or more objects in the visual content or one or more textual portions of the visual content;
generating, based on the detected one or more elements, a set of candidate actions for processing at least a portion of the input image;
ranking the set of candidate actions using a ranking data structure that includes one or more ranking signals; and
providing for display, through a user interface of the electronic device, at least a subset of the ranked set of candidate actions for user selection.

2. The method of claim 1, wherein the first machine learning model comprises an object detector configured to identify the one or more objects within the input image or a text recognition model configured to identify the one or more textual portions within the visual content.

3. The method of any of claims 1-2, wherein the one or more ranking signals comprises an action richness metric, a grounding label relevance metric, an engagement metric, or an embedding similarity metric, and wherein the ranking data structure incorporates historical user interaction data stored in a vector database, the historical user interaction data including frequency of selection, recency of interaction, or engagement rate.

4. The method of any of claims 1-3, wherein ranking of the candidate actions comprises applying an embedding distance metric to differentiate between objects having identical grounding labels with distinct semantic contexts.

5. The method of any of claims 1-4, wherein the set of candidate actions comprises at least one of a visual search action, a summarization action, an "add to" action, or a hyperlink navigation action.

6. The method of any of claims 1-5, further comprising:
receiving, via the user interface, a selection of a candidate action of the set of candidate actions; and
processing at least the portion of the input image based at least in part on the selection of the candidate action.

7. The method of any of claims 1-6, wherein the set of candidate actions is generated using a prompt actions engine configured to infer new prompts from historical user queries.

8. The method of any of claims 1-7, further comprising:
refining grounding outputs using a second machine learning model to generate contextually precise textual representations for downstream applications.

9. The method of any of claims 1-8, further comprising excluding grounding labels determined to be overly generic based at least in part on the one or more ranking signals.

10. The method of any of claims 1-9, wherein at least one candidate action of the ranked set of candidate actions comprises storing an identified object into a save-for-later module associated with at least one of the candidate actions.

11. The method of any of claims 1-10, further comprising routing stored content comprising a structured output to one or more target applications associated with the electronic device.

12. A system comprising:
one or more processors; and
a memory storing instructions that, when executed by the one or more processors, cause the system to:
receive an input image including visual content;
apply a first machine learning model to detect one or more elements in the input image, wherein the one or more elements include one or more objects in the visual content or one or more textual portions of the visual content;
generate a visual bundle comprising features of the input image including the one or more textual portions of the visual content or the one or more objects in the visual content;
apply a second machine learning model to the visual bundle to refine the detected one or more elements into contextually relevant outputs;
generate a set of actions based on the contextually relevant outputs;
rank the set of actions based at least in part on historical user interaction data; and
provide a ranked list of actions for display in a user interface of the system.

13. The system of claim 12, wherein the ranking of the set of actions is further based on an action richness metric that assigns greater relative weight to actions providing specific or contextually beneficial outcomes.

14. The system of any of claims 12-13, wherein the visual bundle includes embeddings generated by a grounding model, a visual lookup component, or both.

15. A non-transitory computer-readable medium storing instructions that, when executed by one or more processors, cause the one or more processors to:
process an input image to generate grounding labels corresponding to objects detected in the input image;
map the grounding labels to one or more content categories or application categories based at least in part on a semantic mapping;
refine the mapped grounding labels using historical user interaction data;
generate one or more prompts associated with the mapped grounding labels, the one or more prompts corresponding to candidate actions executable by the one or more processors;
rank the candidate actions using confidence weighting and embedding distance metrics; and
initiate execution of a selected candidate action in response to user selection of a displayed action item associated with the candidate actions.
